# EUROPEAN PATENT APPLICATION

(11) **EP 4 421 612 A1**
(43) Date of publication of application: **28.08.2024**
(21) Application number: 22903497.0
(22) Date of filing: 07.12.2022
(51) Int. Cl.: G06F 3/14, G06F 3/04842, G06F 3/04817

(54) **NAVIGATION INFORMATION SHARING METHOD, ELECTRONIC DEVICE, AND SYSTEM**

(30) Priority: 09.12.2021 CN 202111503379
(71) Applicant: Huawei Technologies Co., Ltd., Shenzhen, Guangdong 518129 (CN)
(72) Inventor: LI, Jie, Shenzhen, Guangdong 518129 (CN); ZHANG, Leshao, Shenzhen, Guangdong 518129 (CN); ZHOU, Xingchen, Shenzhen, Guangdong 518129 (CN)
(74) Representative: Pfenning, Meinig & Partner mbB
(86) International application number: PCT/CN2022/137174
(87) International publication number: WO 2023/104075

(57) **Abstract**

Embodiments of this application provide a navigation information sharing method, an electronic device, and a system. The method includes: A first electronic device displays a first interface, where the first interface is a display interface of first navigation information; the first electronic device sends a first message in response to detecting a first input performed by a user on the first interface, where the first message includes the first navigation information; a second electronic device displays first prompt information in response to receiving the first message, where the first prompt information is used to ask the user whether to accept the first navigation information; the second electronic device executes a navigation task related to the first navigation information in response to detecting a second input performed by a user for determining to accept the first navigation information. In embodiments of this application, complex inputs and operations of the user in a navigation process are avoided, and user experience is improved.

## Description

This application claims priority to Chinese Patent Application No. 202111503379.4, filed with the China National Intellectual Property Administration on December 9, 2021 and entitled "NAVIGATION INFORMATION SHARING METHOD, ELECTRONIC DEVICE, AND SYSTEM", which is incorporated herein by reference in its entirety.

### TECHNICAL FIELD

Embodiments of this application relate to the terminal field, and more specifically, to a navigation information sharing method, an electronic device, and a system.

### BACKGROUND

Nowadays, an increasing quantity of vehicles are installed with in-vehicle infotainment. When a user is in a vehicle, the user prefers to use an electronic control unit on the vehicle for navigation. However, a destination of navigation is likely to come from an application (application, App) on a mobile phone, for example, a location shared by a WeChat friend or an address of a store on Dianping. If the user needs to switch navigation to the electronic control unit when the user is in the vehicle, the user needs to open a map application on the electronic control unit and manually enter a destination for navigation. As a result, operations performed by the user for navigation with the electronic control unit are complex, and user experience is poor.

### SUMMARY

Embodiments of this application provide a navigation information sharing method, an electronic device, and a system, so that a user does not need to manually enter a destination for navigation. In this way, complex inputs and operations of the user can be avoided, and user experience is improved.

According to a first aspect, a system is provided. The system includes a first electronic device and a second electronic device. The first electronic device is configured to display a first interface, where the first interface is a display interface of first navigation information. The first electronic device is further configured to send a first message in response to detecting a first input performed by a user on the first interface, where the first message includes the first navigation information. The second electronic device is configured to display first prompt information in response to receiving the first message, where the first prompt information is used to ask the user whether to accept the first navigation information. The second electronic device is further configured to execute a navigation task related to the first navigation information in response to detecting a second input performed by the user for determining to accept the first navigation information.

In this embodiment of this application, after detecting the first input performed by the user, the first electronic device may send the first navigation information to the second electronic device. When the second electronic device detects the input performed by the user for determining to accept the first navigation information, the second electronic device can execute the corresponding navigation task. In this way, when executing a navigation task across electronic devices, the user does not need to perform complex operations such as manually entering an address and searching for a navigation route on the second electronic device. The user only needs to determine, on the second electronic device, to accept the first navigation information, so that the second electronic device can execute the navigation task. This improves user experience.

In some possible implementations, the first navigation information includes but is not limited to information such as an address and a route.

In some possible implementations, if the first navigation information includes information about an address, that the second electronic device executes the navigation task includes: The second electronic device displays the address; or the second electronic device displays a selection interface of a navigation route from a current location of the second electronic device to the address, where the selection interface of the navigation route may include one or more routes from the current location of the second electronic device to the address; or the second electronic device displays a display interface of a navigation route from the current location of the second electronic device to the address.

In some possible implementations, information about the address includes information such as a longitude, a latitude, and a name of the address.

In some possible implementations, if the first navigation information includes information about a route from a starting point to a destination, that the second electronic device executes the navigation task includes: The second electronic device displays a display interface of a navigation route from a current location of the second electronic device to the destination; or that the second electronic device executes the navigation task includes: The second electronic device displays a display interface of a navigation route from the starting point to the destination; or the second electronic device displays a selection interface of a navigation route from the current location of the second electronic device to the destination, where the selection interface of the navigation route may include one or more routes from the current location of the second electronic device to the destination.

In some possible implementations, a system of the first electronic device and a system of the second electronic device may be the same or different. For example, both the systems of the first electronic device and the second electronic device may be HarmonyOS.

In some possible implementations, an account logged in to the first electronic device may be the same as or different from an account logged in to the second electronic device.

In some possible implementations, the first message may further carry information about an account logged in to the first electronic device.

In some possible implementations, the first message may further carry device information of the first electronic device.

With reference to the first aspect, in some implementations of the first aspect, the second electronic device is further configured to display a second interface before receiving the first message, where the second interface is a display interface of second navigation information; and the second electronic device is specifically configured to switch from display of the second interface to display of a third interface in response to detecting the second input, where the third interface is a display interface of the navigation task.

In this embodiment of this application, if the second electronic device is displaying the display interface of the second navigation information before receiving the first message, when detecting the second input, the second electronic device may switch from the second interface to the third interface. This helps the user view a new display interface of the navigation information, and improves user experience.

With reference to the first aspect, in some implementations of the first aspect, the second interface is a display interface of a navigation route from a current location of the second electronic device to a first address.

In this embodiment of this application, if the second electronic device is executing a navigation task from the current location to the first address before receiving the first message, when receiving the first message, the second electronic device may first notify the user, instead of directly performing the corresponding navigation task. The navigation task may be executed when the user confirms accepting the first navigation information, so that the second electronic device executes the navigation task that the user expects to execute.

In some possible implementations, the first message carries information about the account logged in to the first electronic device, and the second electronic device is specifically configured to: the second electronic device displays the first prompt information when receiving the first message and determining that the account logged in to the first electronic device is not associated with an account logged in to the second electronic device.

In this embodiment of this application, after receiving the first message, if the second electronic device determines that the account logged in to the first electronic device is not associated with the account logged in to the second electronic device, the second electronic device may first notify the user, instead of directly executing the corresponding navigation task. In this way, for navigation information shared by some unassociated users, a corresponding navigation task may be executed after an owner of the second electronic device confirms accepting the navigation information. In this way, the owner of the second electronic device can have more control over the second electronic device.

In some possible implementations, whether the second electronic device displays the first prompt information may also be determined based on a condition (1) and a condition (2). Condition (1) is whether the second electronic device is executing a navigation task when receiving the first message. Condition (2) is whether the account logged in to the first electronic device is not associated with the account logged in to the second electronic device. For example, the second electronic device may display the first prompt information if the second electronic device determines that both the condition (1) and the condition (2) are met, that is, the second electronic device is executing a navigation task when receiving the first navigation information sent by the first electronic device, and the second electronic device determines that the account logged in to the first electronic device is not associated with the account logged in to the second electronic device.

In some possible implementations, the condition (1) and the condition (2) may correspond to different priorities. When a condition with a higher priority is met, the second electronic device may display the first prompt information.

In some possible implementations, if the priority of the condition (1) is higher than that of the condition (2), when the second electronic device is executing a navigation task when receiving the first navigation information sent by the first electronic device, and the account logged in to the first electronic device is associated with the account logged in to the second electronic device, the second electronic device may also display the first prompt information.

In some possible implementations, if the priority of the condition (2) is higher than that of the condition (1), when the second electronic device is not executing a navigation task when receiving the first navigation information sent by the first electronic device, and the account logged in to the first electronic device is not associated with the account logged in to the second electronic device, the second electronic device may also display the first prompt information.

In some possible implementations, the account logged in to the first electronic device being not associated with the account logged in to the second electronic device includes the following cases. The account logged in to the first electronic device and the account logged in to the second electronic device are not a same account. The account logged in to the first electronic device and the account logged in to the second electronic device are not accounts in a same family group. The account logged in to the first electronic device is not authorized by the account logged in to the second electronic device.

With reference to the first aspect, in some implementations of the first aspect, the first navigation information includes information about a second address, and the second electronic device is specifically configured to display information about a route from the current location of the second electronic device to the second address in response to detecting the second input.

In this embodiment of this application, if the first message sent by the first electronic device carries the information about the first address, the second electronic device may display information about the route from the current location of the second electronic device to the first address when detecting the second input performed by the user. In this way, a process in which the user searches for a navigation route from the current location to the first address and a process in which the user selects a route from a plurality of routes is omitted. This improves user experience.

In some possible implementations, the first navigation information includes the information about the second address, and the second electronic device is specifically configured to: display one or more routes in response to detecting the second input, where the one or more routes are routes from the current location of the second electronic device to the first address; and display a display interface of a first route in response to detecting that the user selects the first route from the one or more routes.

With reference to the first aspect, in some implementations of the first aspect, a first account is logged in to the second electronic device, and the second electronic device is further configured to: before displaying the first prompt information, detect a third input performed by the user for enabling a first function. When the first function is enabled, the second electronic device can notify the user when receiving information shared by an electronic device to which another account other than the first account is logged in.

In this embodiment of this application, the second electronic device may provide the first function for the user. In this way, when the first function is enabled, the second electronic device may notify the user when receiving information shared by an electronic device to which another account is logged in, so that the user can check in time the information shared by the electronic device to which the another account is logged in and determine whether to accept the information. The user can flexibly set whether to accept the information shared by the another account. In this way, the user can make choices more flexibly, and therefore, user experience is improved.

In some possible implementations, in a case in which the first function is disabled, when receiving information shared by an electronic device to which another account other than the first account is logged in, the second electronic device ignores the shared information, or does not notify the user.

With reference to the first aspect, in some implementations of the first aspect, the second electronic device stores first human physiological parameter information, and the second electronic device is further configured to: before executing the navigation task, determine that human physiological parameter information of the user who performs the second input matches the first human physiological parameter information.

In this embodiment of this application, when detecting the second input, the second electronic device may match the human physiological parameter information of the user implementing the second input with the human physiological parameter information stored in the second electronic device. If matching succeeds, the navigation task can be executed. In this way, another user can be prevented from randomly accepting navigation information, the owner of the second electronic device can have more control over the second electronic device.

With reference to the first aspect, in some implementations of the first aspect, the system further includes a third electronic device. A second account is logged in to the third electronic device. The second account is associated with an account logged in to the second electronic device. The third electronic device is configured to display a fourth interface. The fourth interface is a display interface of third navigation information. The third electronic device is further configured to send a second message in response to detecting a fourth input performed by the user on the fourth interface, where the second message includes the third navigation information. The second electronic device is configured to execute, in response to receiving the second message, a navigation task related to the third navigation information.

In this embodiment of this application, if the account logged in to the second electronic device is associated with the account logged in to the third electronic device, after receiving the second message sent by the third electronic device, the second electronic device may directly perform the navigation task related to the third navigation information without displaying prompt information. The process of confirming accepting the third navigation information by the user is omitted, and user experience is improved while security is ensured.

With reference to the first aspect, in some implementations of the first aspect, the first electronic device is further configured to display second prompt information on the first interface in response to detecting establishment of a connection between the first electronic device and the second electronic device, where the second prompt information is used to ask the user whether to send the first navigation information to the second electronic device. The first electronic device is further configured to send the first message to the second electronic device in response to receiving a fifth input performed by the user for determining to send the first navigation information to the second electronic device.

In this embodiment of this application, when the first electronic device detects that the connection is established between the first electronic device and the second electronic device. The first electronic device may actively ask the user whether to share the first navigation information with the second electronic device. In this way, a process in which the user searches for nearby devices and selects the second electronic device from the nearby devices is omitted. This helps improve user experience.

With reference to the first aspect, in some implementations of the first aspect, the first interface includes a sharing control, and the first electronic device is specifically configured to: display a sharing window in response to detecting a sixth input performed by the user for the sharing control, where the sharing window includes identification information of the second electronic device; and send the first message to the second electronic device in response to detecting a seventh input performed by the user for the identification information of the second electronic device.

In this embodiment of this application, the user may view the identification information of the second electronic device by tapping the sharing control on the first interface. After detecting the seventh input performed by the user, the first electronic device may send the first navigation information to the second electronic device. The sharing control is provided on the first interface, so that the user can conveniently share the first navigation information with the second electronic device. This improves user experience.

In some possible implementations, the identification information of the second electronic device may be an icon of the second electronic device.

With reference to the first aspect, in some implementations of the first aspect, a second map application is installed on the second electronic device, and the second electronic device is specifically configured to display the navigation task on the second map application in response to detecting the second input.

In this embodiment of this application, after receiving the first navigation information, the second electronic device may perform navigation by using the map application installed on the second electronic device, to facilitate the user to view the navigation task.

With reference to the first aspect, in some implementations of the first aspect, the second electronic device is specifically configured to: before displaying the navigation task on the second map application, convert a data format of the first navigation information into a second data format, where the second data format belongs to a data format of the second map application; and display the navigation task based on the first navigation information obtained through data format conversion.

In this embodiment of this application, if the first map application installed on the first electronic device is different from the second map application installed on the second electronic device, the second electronic device may convert the data format of the first navigation information before executing the navigation task, to convert the data format of the first navigation information into the navigation format of the map application installed on the second electronic device.

In some possible implementations, the first interface is a display interface of the first map application. A data format of the first navigation information is a first data format. The first data format belongs to a data format of the first map application.

With reference to the first aspect, in some possible implementations of the first aspect, the second electronic device is a vehicle.

In this embodiment of this application, when receiving the first message sent by the first electronic device, the vehicle may display the first prompt information. In this way, the vehicle may perform the navigation task when detecting the second input performed by the user. The user (for example, a driver) does not need to manually enter an address or select a route on a display of the vehicle. This improves safety during driving.

In some possible implementation, the second device is a mobile phone.

According to a second aspect, a navigation information sharing method is provided. The method is applied to an electronic device. The method includes: The electronic device receives a first message sent by another electronic device, where the first message includes first navigation information. The electronic device displays first prompt information in response to receiving the first message, where the first prompt information is used to ask a user whether to accept the first navigation information. The electronic device executes a navigation task related to the first navigation information in response to detecting an input performed by the user for determining to accept the first navigation information.

With reference to the second aspect, in some implementations of the second aspect, before that the electronic device receives a first message, the method further includes: The electronic device displays a second interface, where the second interface is a display interface of second navigation information. That the electronic device executes a navigation task related to the first navigation information in response to detecting an input performed by the user for determining to accept the first navigation information includes: The electronic device switches from display of the second interface to display of a third interface in response to detecting the input, where the third interface is a display interface of the navigation task.

With reference to the second aspect, in some implementations of the second aspect, the second interface is a display interface of a navigation route from a current location of the electronic device to a first address.

With reference to the second aspect, in some implementations of the second aspect, the first navigation information includes information about a second address. That the electronic device executes a navigation task related to the first navigation information in response to detecting an input performed by the user for determining to accept the first navigation information includes: The electronic device displays information about the route from a current location of the electronic device to the second address in response to detecting the input.

With reference to the second aspect, in some implementations of the second aspect, a first account is logged in to the electronic device. The method further includes: Before displaying the first prompt information, the electronic device detects that the user enables a first function, where in a case in which the first function is enabled, the electronic device can notify the user when receiving information shared by an electronic device to which another account other than the first account is logged in.

With reference to the second aspect, in some implementations of the second aspect, the electronic device stores first human physiological parameter information. The method further includes: Before executing the navigation task, the electronic device determines that human physiological parameter information of the user who performs the input matches the first human physiological parameter information.

With reference to the second aspect, in some implementations of the second aspect, the method further includes: The electronic device receives a second message sent by another electronic device, where the second message includes third navigation information, and an account logged in to the another electronic device is associated with an account logged in to the electronic device. The electronic device executes a navigation task related to the third navigation information in response to receiving the second message.

With reference to the second aspect, in some implementations of the second aspect, a second map application is installed on the electronic device. That the electronic device executes a navigation task related to the first navigation information in response to detecting an input performed by a user for determining to accept the first navigation information includes: The electronic device displays the navigation task on the second map application in response to detecting the input.

With reference to the second aspect, in some implementations of the second aspect, a first map application is installed on the another electronic device, a data format of the first navigation information is a first data format, and the first data format belongs to a data format of the first map application. That the electronic device displays the navigation task on the second map application includes: The electronic device converts the data format of the first navigation information into a second data format, where the second data format belongs to a data format of the second map application; and displays the navigation task based on the first navigation information obtained through data format conversion.

According to a third aspect, a navigation information sharing method is provided. The method is applied to an electronic device. The method includes: The electronic device displays a first interface, where the first interface is a display interface of first navigation information. The electronic device displays prompt information on the first interface in response to establishment of a connection between the electronic device and another electronic device, where the prompt information is used to ask a user whether to send the first navigation information to the another electronic device. The electronic device sends a first message to the another electronic device in response to detecting an input performed by the user for determining to send the first navigation information to the another electronic device, where the first message includes the first navigation information.

According to a fourth aspect, an apparatus is provided. The apparatus includes: a receiving unit, configured to receive a first message sent by another electronic device, where the first message includes first navigation information; a display unit, configured to display first prompt information, where the first prompt information is used to ask a user whether to accept the first navigation information; a detection unit, configured to detect an input performed by the user for determining to accept the first navigation information; and an execution unit, configured to execute a navigation task related to the first navigation information.

According to a fifth aspect, an apparatus is provided. The apparatus includes: a display unit, configured to: display a first interface, where the first interface is a display interface of first navigation information; and when a connection is established between the electronic device and another electronic device, display prompt information on the first interface, where the prompt information is used to ask a user whether to send the first navigation information to the another electronic device; a detection unit, configured to detect an input performed by the user for determining to send the first navigation information to the another electronic device; and a sending unit, configured to send a first message to the another electronic device, where the first message includes the first navigation information.

According to a sixth aspect, an electronic device is provided, including one or more processors, a memory, and one or more computer programs. The one or more computer programs are stored in the memory, and the one or more computer programs include instructions. When the instructions are executed by the electronic device, the electronic device is enabled to perform the method in any possible implementation of the second aspect.

According to a seventh aspect, an electronic device is provided, including one or more processors, a memory, and one or more computer programs. The one or more computer programs are stored in the memory, and the one or more computer programs include instructions. When the instructions are executed by the electronic device, the electronic device is enabled to perform the method in any possible implementation of the third aspect.

According to an eighth aspect, a computer program product including instructions is provided. When the computer program product runs on an electronic device, the electronic device is enabled to perform the method according to the second aspect; or when the computer program product runs on an electronic device, the electronic device is enabled to perform the method according to the third aspect.

According to a ninth aspect, a computer-readable storage medium is provided. The storage medium may be a nonvolatile storage medium. The storage medium includes instructions. When the instructions are run on an electronic device, the electronic device is enabled to perform the method according to the second aspect; or when the instructions are run on the electronic device, the electronic device is enabled to perform the method according to the third aspect.

According to a tenth aspect, a chip is provided, configured to execute instructions. When the chip runs, the chip performs the method according to the second aspect; or the chip performs the method according to the third aspect.

### BRIEF DESCRIPTION OF DRAWINGS

FIG. 1 is a schematic diagram of a structure of an electronic device;
FIG. 2(a)-1 to FIG. 2(l) are a set of graphical user interfaces GUIs according to an embodiment of this application;
FIG. 3(a) to FIG. 3(d)-2 are another set of GUIs according to an embodiment of this application;
FIG. 4(a)-1 to FIG. 4(e)-2 are another set of GUIs according to an embodiment of this application;
FIG. 5(a) to FIG. 5(e) are another set of GUIs according to an embodiment of this application;
FIG. 6(a) to FIG. 6(d) are another set of GUIs according to an embodiment of this application;
FIG. 7(a)-1 to FIG. 7(d) are another set of GUIs according to an embodiment of this application;
FIG. 8 is a schematic diagram of determining, by a vehicle through identifying physiological feature information of a user, whether to switch a route according to an embodiment of this application;
FIG. 9 is another schematic diagram of determining, by a vehicle through identifying physiological feature information of a user, whether to switch a route according to an embodiment of this application;
FIG. 10 is a schematic flowchart of a method for interaction between a mobile phone and a vehicle according to an embodiment of this application;
FIG. 11 is another schematic flowchart of a method for interaction between a mobile phone and a vehicle according to an embodiment of this application;
FIG. 12 is another set of GUIs according to an embodiment of this application;
FIG. 13(a)-1 to FIG. 13(c) are another set of GUIs according to an embodiment of this application;
FIG. 14(a)-1 to FIG. 14(d) is another set of GUIs according to an embodiment of this application;
FIG. 15 is a schematic flowchart of a navigation information sharing method according to an embodiment of this application;
FIG. 16 is a schematic block diagram of an apparatus according to an embodiment of this application;
FIG. 17 is another schematic block diagram of an apparatus according to an embodiment of this application; and
FIG. 18 is a schematic diagram of a structure of an electronic device according to an embodiment of this application.

### DESCRIPTION OF EMBODIMENTS

The following describes technical solutions in embodiments of this application with reference to accompanying drawings in embodiments of this application. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in descriptions of embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more such features. In descriptions of the embodiments, unless otherwise specified, "a plurality of" means two or more than two.

A method provided in embodiments of this application may be applied to an electronic device like a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

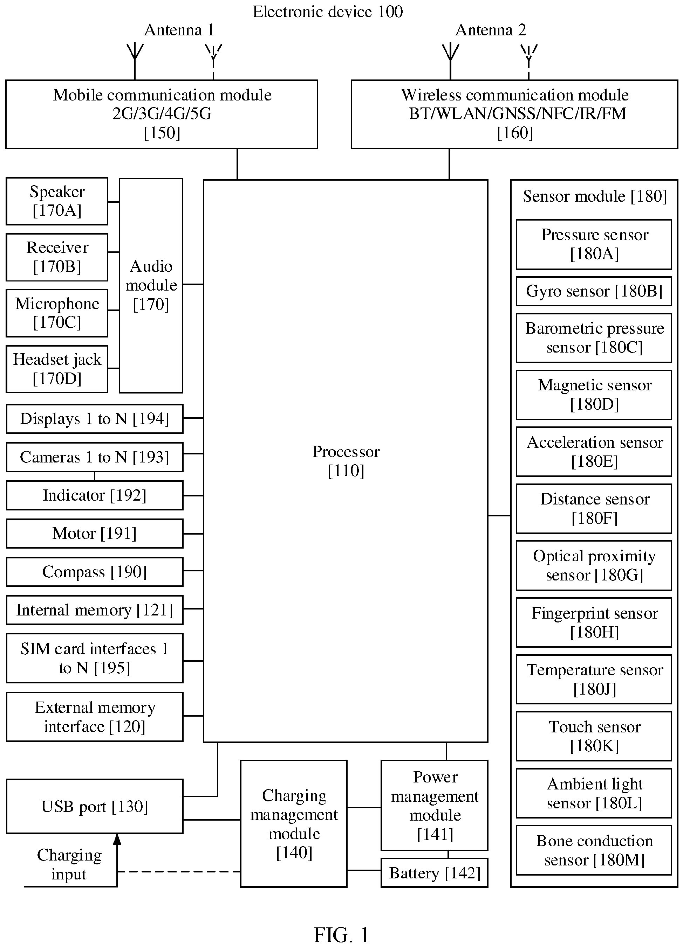

For example, FIG. 1 is a schematic diagram of a structure of the electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components are combined, some components are split, or a different component arrangement may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store an instruction or data that has been used or that is cyclically used by the processor 110. If the processor 110 needs to use the instruction or the data again, the processor may directly invoke the instruction or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call with a Bluetooth headset.

The PCM interface may also be used for audio communication, and analog signal sampling, quantization, and coding. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call with the Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, a UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music with a Bluetooth headset.

The MIPI may be configured to connect the processor 110 to peripheral components such as the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI, or the like.

The USB port 130 is a port that conforms to a USB standard specification, and may be specifically a mini USB port, a micro USB port, a USB Type C port, or the like. The USB port 130 may be configured to connect to a charger to charge the electronic device 100, or may be configured to transmit data between the electronic device 100 and a peripheral device, or may be configured to connect to a headset, to play an audio by using a headset. The port may be further configured to connect to another electronic device like an AR device.

It may be understood that the interface connection relationships between the modules in this embodiment of this application are merely examples for description, and do not constitute a limitation on a structure of the electronic device 100. In some other embodiments of this application, the electronic device 100 may alternatively use an interface connection manner different from those in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is for wireless communication including 2G, 3G, 4G, 5G, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal to an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then the demodulator transmits the low frequency baseband signal obtained through demodulation to the baseband processor for processing. The low frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and the modem processor and the mobile communication module 150 or another functional module may be disposed in a same device.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processing module. The wireless communication module 160 receives an electromagnetic wave through the antenna 2, performs processing like frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal to an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include technologies such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is used for mathematical and geometric computation, and image rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, when a shutter is open, light is transmitted to a photosensitive element of the camera through a lens. An optical signal is converted to an electrical signal. The photosensitive element of the camera transmits the electrical signal to the ISP for processing, and converts the electrical signal to a visible image. The ISP may further perform algorithm optimization on noise, luminance, and complexion of an image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal to an electrical signal, and then transmits the electrical signal to the ISP, so that the electrical signal is converted to a digital image signal. The ISP outputs the digital image signal to the DSP for processing. The DSP converts the digital image signal to an image signal in a standard format like RGB or YUV. In some embodiments, the electronic device 100 may include one or N cameras 193, where N is a positive integer greater than 1.

The digital signal processor is configured to process a digital signal, and may process other digital signals other than the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

An NPU is a neural-network (neural-network, NN) computing processor. The NPU quickly processes input information with reference to a structure of a biological neural network, for example, a transfer mode between human brain neurons, and can continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 executes various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (like audio data and contacts) and the like created during use of the electronic device 100. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function through the audio module 170, the speaker 170A, the receiver 170B, the microphone 170C, the headset jack 170D, and the application processor.

The audio module 170 is configured to convert digital audio information to an analog audio signal for output, and is also configured to convert an analog audio input to a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal to a sound signal. The electronic device 100 may be configured to listen to music or answer a call in a hands-free mode over the speaker 170A.

The receiver 170B, also referred to as an "earpiece", is configured to convert an electrical audio signal to a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal to an electrical signal. When making a call or sending a voice message, the user may make a sound near the microphone 170C by moving the mouth, to input a sound signal to the microphone 170C. At least one microphone 170C is disposed in the electronic device 100. In some other embodiments, two microphones 170C may be disposed in the electronic device 100, to collect a sound signal and further implement a noise cancellation function. In some other embodiments, three, four, or more microphones 170C may be disposed in the electronic device 100, to collect a sound signal, implement noise cancellation, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal to an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates including conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may calculate a touch position based on a detection signal of the pressure sensor 180A. In some embodiments, touch operations that are performed at a same touch location but have different touch intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyro sensor 180B may be configured to determine a motion posture of the electronic device 100. In some embodiments, an angular velocity of the electronic device 100 around three axes (that is, axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which the lens module needs to compensate, and allows the lens to cancel jitter of the electronic device 100 through reverse motion, to implement image stabilization. The gyro sensor 180B may be further used in a navigation scenario and a motion-sensing gaming scenario.

The barometric pressure sensor 180C is configured to measure barometric pressure. In some embodiments, the electronic device 100 calculates an altitude based on a value of a barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell, the electronic device 100 may detect opening and closing of a flip cover based on the magnetic sensor 180D. Further, a feature like automatic unlocking upon opening is set based on a detected opening or closing state of the flip cover or a clamshell.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in applications such as switch between a landscape mode and a portrait mode or a pedometer.

The distance sensor 180F is configured to measure a distance. The electronic device 100 may measure a distance by using infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects reflected infrared light from a nearby object by using a photodiode. When sufficient reflected light is detected, it can be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically unlock or lock a screen.

The ambient light sensor 180L is configured to sense ambient light brightness. The electronic device 100 may adaptively adjust brightness of the display 194 based on sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when a temperature is less than another threshold, the electronic device 100 heats the battery 142 to prevent the electronic device 100 from abnormal shutdown caused by a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from a position of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input to generate a button signal input related to user settings and functional control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, time reminding, information receiving, an alarm clock, and gaming) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into one SIM card interface 195. The plurality of cards may be of a same type, or may be of different types. Different types of SIM cards are compatible in the SIM card interface 195. The SIM card interface 195 is also compatible with an external storage card. The electronic device 100 interacts with a network through the SIM card, to implement functions such as calling and data communication. In some embodiments, the electronic device 100 uses an embedded-SIM (embedded-SIM, eSIM), that is, an eSIM card. The eSIM card may be embedded into the electronic device 100, and cannot be separated from the electronic device 100.

It should be understood that a telephone card in this embodiment of this application includes but is not limited to a SIM card, an eSIM card, a global subscriber identity module (universal subscriber identity module, USIM), a universal integrated circuit card (universal integrated circuit card, UICC), and the like.

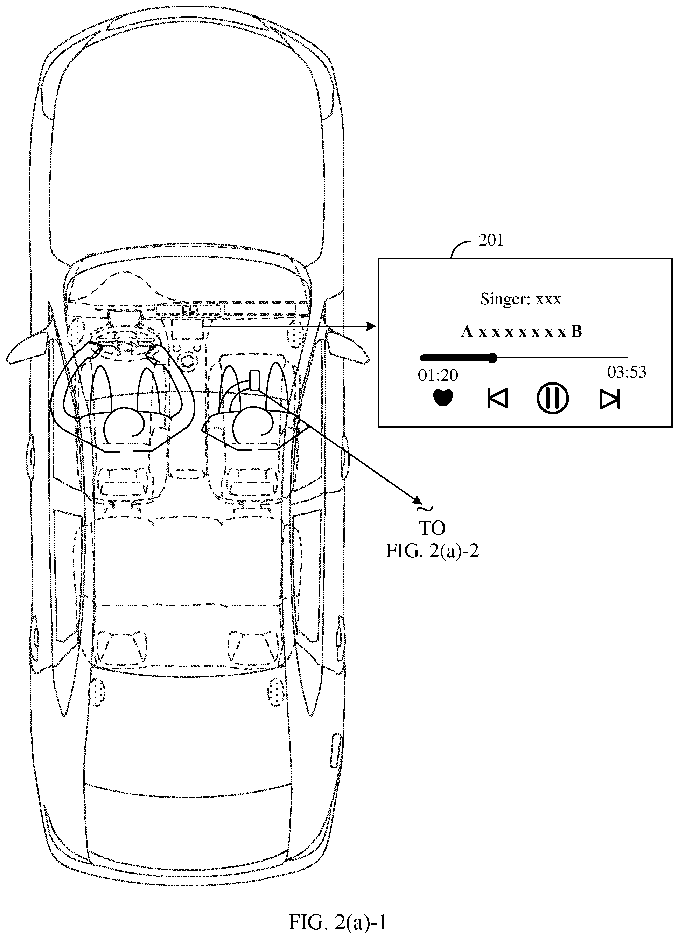

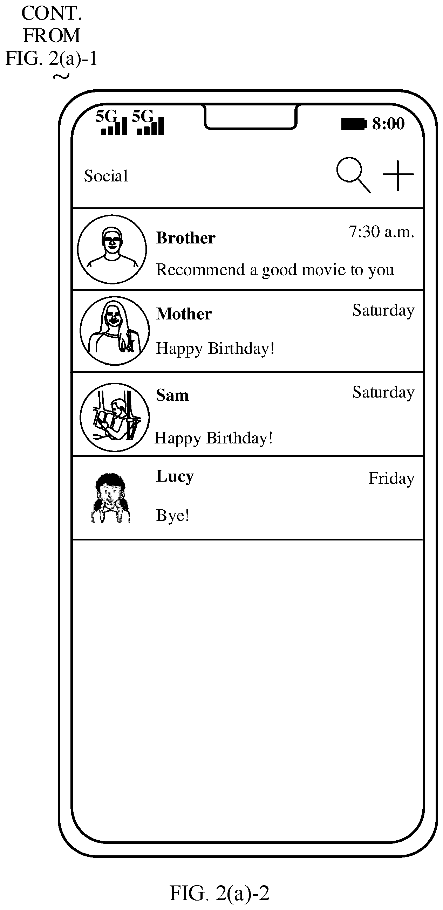

FIG. 2(a)-1 to FIG. 2(l) show a set of graphical user interfaces (graphical user interfaces, GUIs) according to an embodiment of this application.

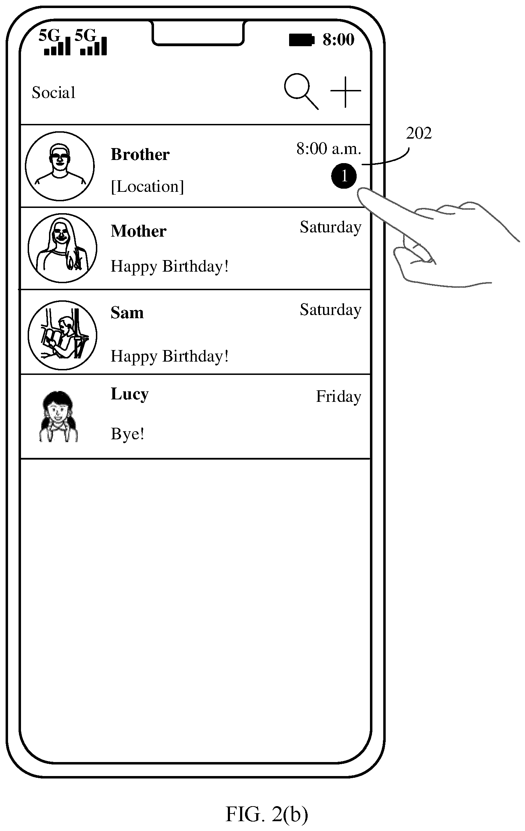

As shown in FIG. 2(a)-1, when a father (in a driver's seat) drives with a daughter (in a front passenger seat), a music playing interface 201 is displayed on a central display of the vehicle. The playing interface 201 includes information about a singer (for example, xxx), information about lyrics (for example, AxxxxxxxB), a progress bar of a song (for example, duration of the song is 3 minutes 53 seconds, and a current progress of song playing is 1 minute 20 seconds), a like, a control for playing a previous song, a control for pause, and a control for playing a next song. In this case, a display interface of the social application is displayed on a mobile phone of the daughter in the front passenger seat. The display interface includes a plurality of interface elements, for example, a chat record between the user and a contact brother, a chat record between the user and a contact mother, a chat record between the user and a contact Sam, and a chat record between the user and a contact Lucy. The chat record between the user and the contact father is used as an example. The chat record includes profile picture information of the contact brother, a nickname of the contact brother, a latest chat record with the contact brother (for example, "Recommend a good movie to you"), and an occurrence time (for example, 7:30 a.m.) of the latest chat record. When the mobile phone of the daughter receives a message of the social application, the mobile phone may display a GUI shown in FIG. 2(b).

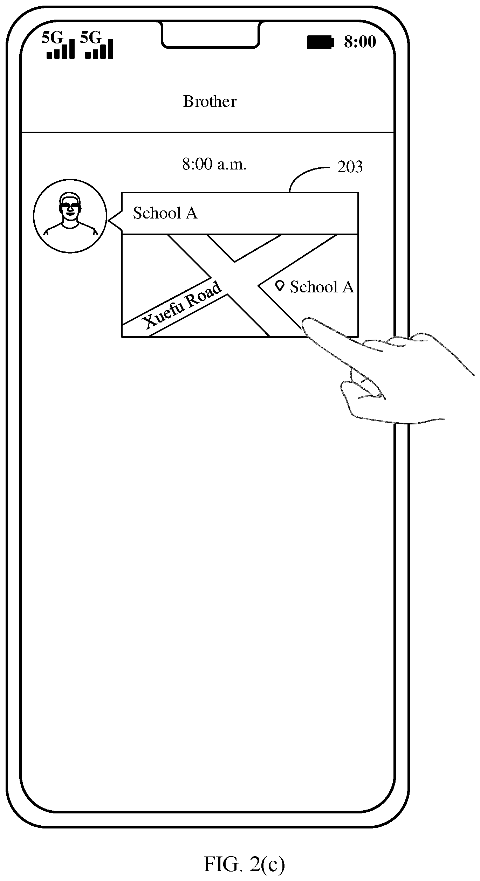

The GUI shown in FIG. 2(b) is another display interface of the social application. When the mobile phone of the daughter receives a location message shared by the contact brother, the mobile phone may update the latest chat record with the contact brother to the shared location information, and an icon 202 appears on a right side of the chat record with the contact brother, where the icon 202 may be used to indicate the user that there is an unread message. When the mobile phone detects an operation of tapping, by the user, the chat record with the contact brother, the mobile phone may display a GUI shown in FIG. 2(c).

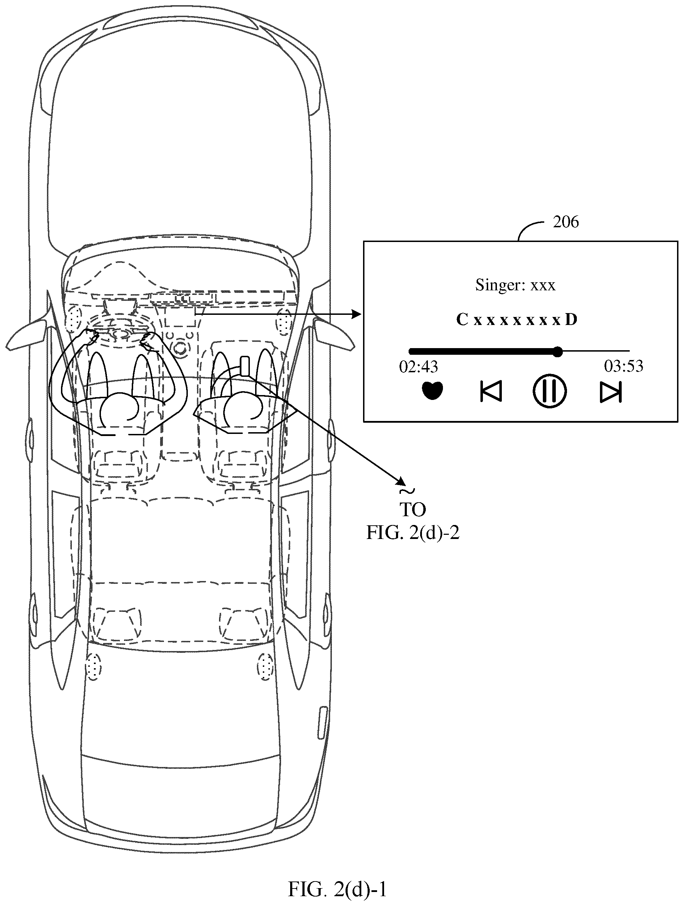

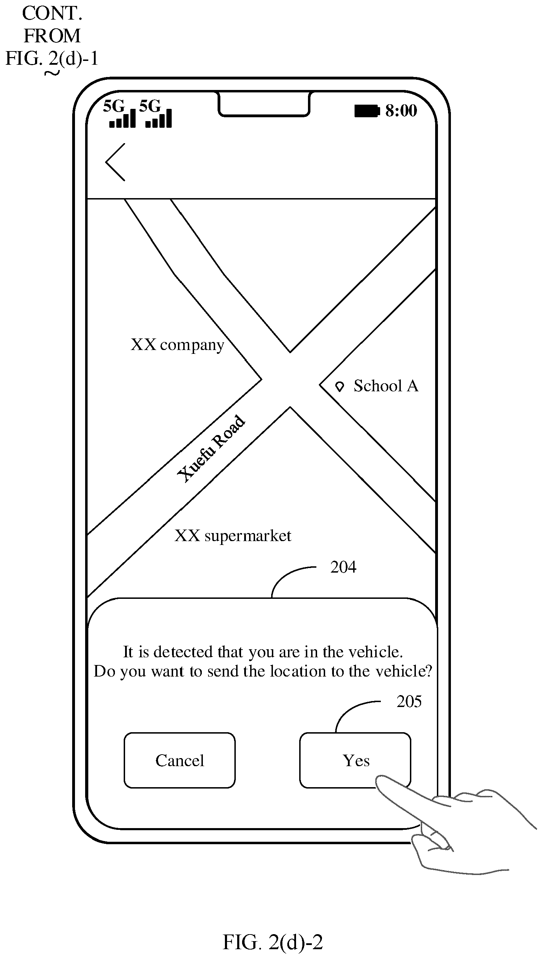

The GUI shown in FIG. 2(c) is an interface of a chat between the user and the contact brother on the social application. A latest message 203 (for example, a location of a school A) sent by the brother may be displayed on the chat interface. When the mobile phone detects an operation of tapping the message 203 by the user, the mobile phone may display a GUI shown in FIG. 2(d)-2.

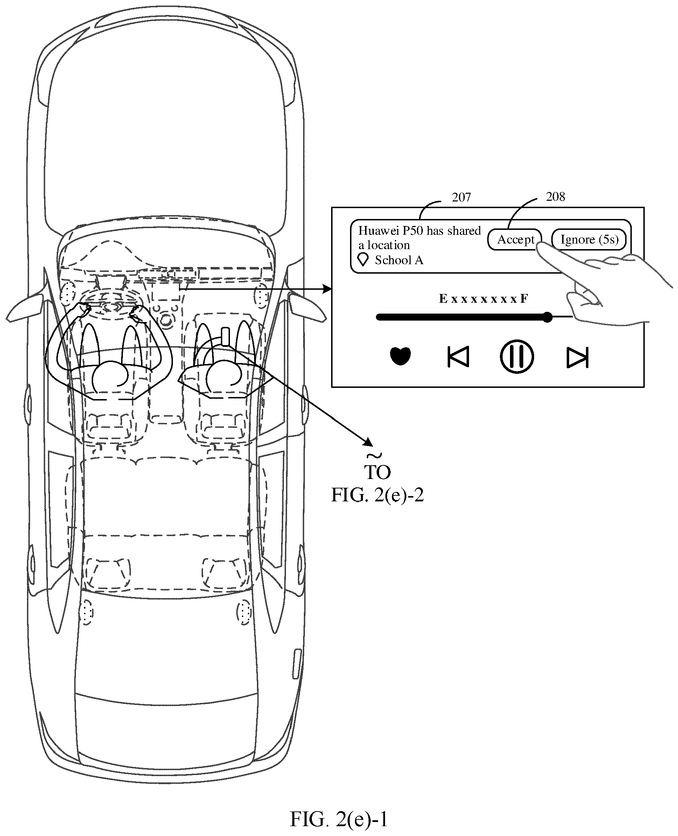

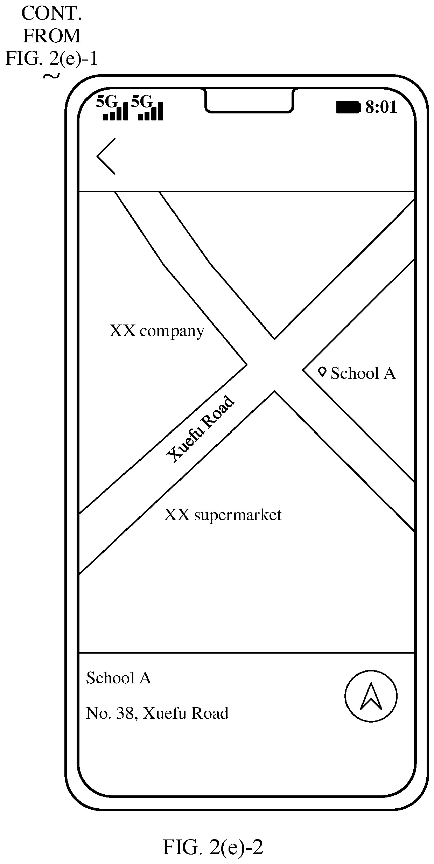

In the GUI shown in FIG. 2(d)-2, the mobile phone may display location information of the school A on a map. In addition, the mobile phone may display a prompt box 204, where the prompt box 204 includes prompt information "It is detected that you are in the vehicle. Do you want to send the location to the vehicle?", a "Cancel" control, and a "Yes" control 205. In this case, a music playing interface 206 is displayed on the central display of the vehicle. Different from that on the playing interface 201, information about the lyrics changes to "CxxxxxxxD", and the progress bar of the song indicates that a current progress of song playing is 2 minutes 43 seconds. When the mobile phone detects an operation of tapping the control 205 by the user, the mobile phone may display a GUI shown in FIG. 2(e)-2 and the vehicle may display a GUI shown in FIG. 2(e)-1.

In an embodiment, if the mobile phone detects tapping of the "Cancel" control by the user, the mobile phone may continue to display the location information of the school A on the map, and the mobile phone may not send the location information of the school A to the vehicle.

In the GUI shown in FIG. 2(e)-2, in response to detecting the operation of tapping the control 205 by the user, the mobile phone may send device information of the mobile phone (for example, a model of the mobile phone, which is Huawei P50) and the location information of the school A to the vehicle. In response to receiving the device information and the location information that are sent by the mobile phone, the vehicle may display a prompt box 207 on the central display, where the prompt box 207 includes prompt information "Huawei P50 has shared a location School A", an "Accept" control 208, and an "Ignore" control. In an embodiment, when the mobile phone detects an operation of tapping the control 205 by the user, the mobile phone may display the location information of the school A on the map; or the mobile phone may return to the interface of the chat with the contact brother.

In an embodiment, when the mobile phone detects the operation of tapping the control 205 by the user, the mobile phone may further send information about an account logged in to the mobile phone (for example, a nickname Lily of an account logged in to the mobile phone of the daughter) to the vehicle. In this case, when receiving the account information, the vehicle may display prompt information "Lily has shared a location School A by using Huawei P50"in the prompt box 207.

In an embodiment, a Bluetooth connection may be established between the mobile phone and the vehicle. When the mobile phone of the daughter receives a location-related message and the mobile phone determines that the connection with the vehicle is established, the mobile phone may ask, by using the prompt box 204, the user whether to send a location to the vehicle. When the mobile phone detects the operation of tapping the control 205 by the user, the mobile phone may send a Bluetooth message to the vehicle, so that the Bluetooth message carries the device information of the mobile phone and the location information.

In an embodiment, before the mobile phone detects tapping of the control 205 by the user, a connection between the mobile phone and the vehicle may not be established. The mobile phone may send a Bluetooth broadcast message to a nearby device (for example, the Bluetooth broadcast message may be used to query a device type of the nearby device). After receiving the Bluetooth broadcast message, the vehicle may send, to the mobile phone, a Bluetooth message that carries a device type of the vehicle. Then the mobile phone may determine, based on the Bluetooth message, that the nearby device includes a vehicle. When the mobile phone receives a location-related message, the mobile phone may ask, by using the prompt box 204, the user whether to send a location to the vehicle. When the mobile phone detects an operation of tapping the control 205 by the user, the mobile phone may initiate Bluetooth connection to the vehicle. When the Bluetooth connection between the mobile phone and the vehicle is established, the mobile phone may send the Bluetooth message to the vehicle, so that the Bluetooth message carries the device information of the mobile phone and the location information.

It should be understood that the foregoing embodiment is described by using an example in which the Bluetooth connection is established between the mobile phone and the vehicle. In this embodiment of this application, the mobile phone and the vehicle may further establish a connection through Wi-Fi, a cellular network, a cloud server, and the like.

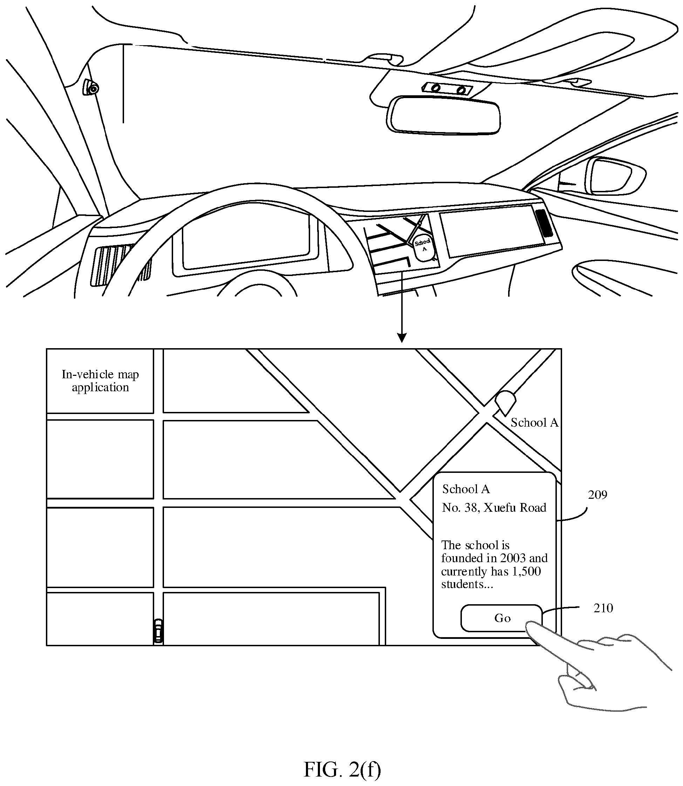

When the vehicle detects an operation of tapping the "Accept" control 208 by the user, the vehicle may display, on the central display, a GUI shown in FIG. 2(f).

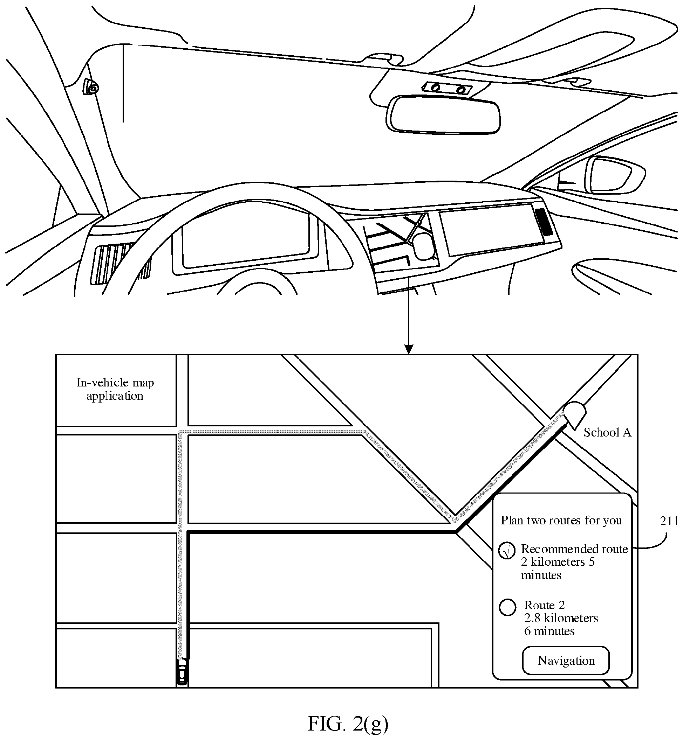

As shown in the GUI in FIG. 2(f), in response to detecting the operation of tapping the control 208 by the user, the vehicle may control the central display to jump from the playing interface of the music application to a display interface of an in-vehicle map application. The display interface of the in-vehicle map application may display location information of the school A on the map and a prompt box 209, where the prompt box 209 includes a location of the school A (for example, No. 38, Xuefu Road), an introduction of the school A (for example, the school is founded in 2003 and currently has 1,500 students), and a control 210. When the vehicle detects an operation of tapping the control 210 by the user, the vehicle may display, on the central display, a GUI shown in FIG. 2(g).

In an embodiment, information sent by the mobile phone to the vehicle may further include information about the account logged in to the mobile phone. After receiving the information sent by the mobile phone, if the vehicle determines that the account logged in to the mobile phone is associated with an account logged in to the vehicle, the vehicle may not display the prompt box 207, but directly display the GUI shown in FIG. 2(f).

In an embodiment, that the account logged in to the mobile phone is associated with the account logged in to the vehicle may be that the account logged in to the mobile phone and the account logged in to the vehicle are the same, or may be that the account logged in to the mobile phone is an account in a family group to which the account logged in to the vehicle belongs.

In an embodiment, after determining that the account logged in to the mobile phone is associated with the account logged in to the vehicle, the vehicle may also display the prompt box 207.

In an embodiment, if the vehicle is performing a navigation task when receiving a location or route information sent by the mobile phone (for example, when receiving the information, the vehicle is displaying a display interface of a navigation route from a current location of the vehicle to a destination), the vehicle may display the prompt box 207. The prompt box 207 may be used to ask the user whether to display the location information or route information sent by the mobile phone. If the vehicle is not executing a navigation task when receiving the location or route information sent by the mobile phone (for example, the vehicle is displaying a music playing interface when receiving the information), the vehicle may not display the prompt box 207, but directly open the in-vehicle map application and display the location or route information sent by the mobile phone.

In an embodiment, whether the vehicle displays the prompt box 207 may also be determined based on a condition (1) indicating whether the vehicle is performing a navigation task and a condition (2) indicating whether the account logged in to the mobile phone is not associated with the account logged in to the vehicle. For example, if the vehicle determines that both the condition (1) and the condition (2) are met, that is, the vehicle is performing a navigation task when receiving the location or route information sent by the mobile phone, and the vehicle determines that the account logged in to the mobile phone is not associated with the account logged in to the vehicle, the vehicle may display the prompt box 207.

For another example, the condition (1) and the condition (2) may correspond to different priorities. When a condition of a higher priority is met, the vehicle may display the prompt box 207.

If the priority of the condition (1) is higher than that of the condition (2), when the vehicle is performing a navigation task when receiving the location or route information sent by the mobile phone, and the account logged in to the mobile phone is associated with the account logged in to the vehicle, the vehicle may also display the prompt box 207.

If the priority of the condition (2) is higher than that of the condition (1), when the vehicle is not performing a navigation task when receiving the location or route information sent by the mobile phone, and the account logged in to the mobile phone is not associated with the account logged in to the vehicle, the vehicle may also display the prompt box 207.

In an embodiment, if the vehicle detects tapping of the "Ignore" control by the user in the prompt box 207, the vehicle may continue to display the music playing interface.

In the GUI shown in FIG. 2(g), in response to detecting an operation of tapping the control 210 by the user, the vehicle may display a prompt box 211 on the central display. The prompt box 211 includes a navigation control 212 and a route from a current location of the vehicle to the school A planned by the in-vehicle map application for the user. For example, the in-vehicle map application plans two routes for the user, including a recommended route (a distance from the current location to the school A is 2 kilometers and a travel time is 5 minutes) and a route 2 (a distance from the current location to the school A is 2.8 kilometers and a travel time is 6 minutes).

In an embodiment, when detecting an operation of selecting the recommended route and tapping the control 212 by the user, the vehicle may display, on the central display, a navigation-route display interface displaying the recommended route for driving to the school A.

It should be understood that, in FIG. 2(a)-1 and FIG. 2(e)-1, the location information shared by another device is received when the central display of the vehicle displays the music playing interface, or the location information shared by another device is received when the central display of the vehicle displays the display interface of the in-vehicle map application, and the central display of the vehicle may further include more interface elements.

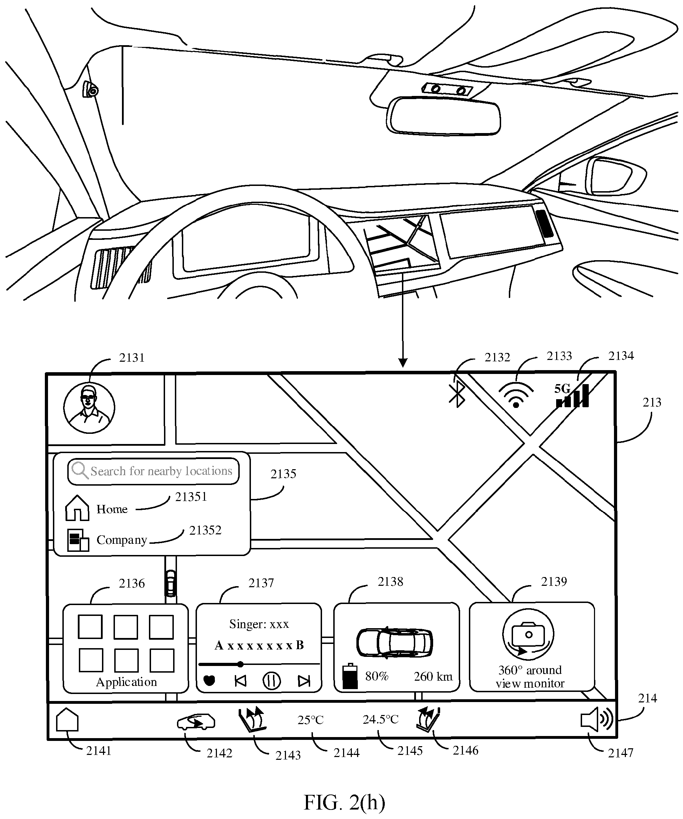

As shown in FIG. 2(h), the central display of the vehicle displays a display interface 213 and a function bar 214 of the in-vehicle map application. The display interface includes profile picture information 2131 of a user account logged in to the vehicle, a Bluetooth function icon 2132, a Wi-Fi function icon 2133, a cellular network signal icon 2134, an in-vehicle map application search box 2135, a card 2136 for switching to display of all applications installed on the vehicle, a card 2137 for switching to display of the in-vehicle music application, a card 2138 for displaying a remaining battery level and a remaining driving mileage of the vehicle, and a card 2139 for displaying a 360-degree (°) around view monitor function of the vehicle. The in-vehicle map application search box 2135 may include a "Home" control 21351 and a "Company" control 21352 that are set by the user. The function bar 214 includes an icon 2141 for switching to a home screen of the central display, an icon 2142 for inner vehicle circulation, an icon 2143 for a driver's seat heating function, an icon 2144 for displaying an air conditioner temperature in a driver's seat area, an icon 2145 for displaying an air conditioner temperature in a front passenger seat area, an icon 2146 for a front passenger seat heating function, and an icon 2147 for volume setting.

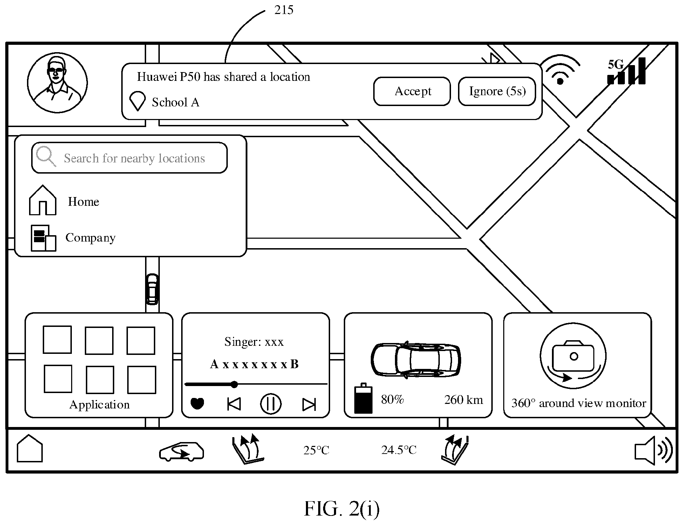

As shown in FIG. 2(i), after receiving the location information sent by the mobile phone, the vehicle may display a prompt box 215 on the display interface 213 of the in-vehicle map application, where the prompt box 215 includes the prompt information "Huawei P50 has shared a location School A", an "Accept" control, and an "Ignore" control.

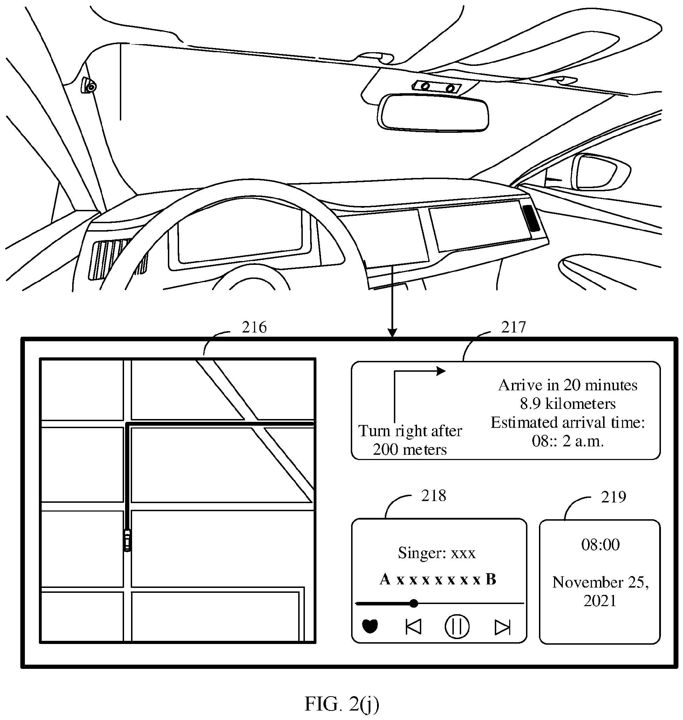

In an embodiment, a layout of the interface elements on the central display of the vehicle may alternatively be that shown in FIG. 2(j).

As shown in FIG. 2(j), a plurality of cards 216 to 219 are displayed on the central display of the vehicle. The card 216 displays a navigation information display interface of the in-vehicle map application, the card 217 displays navigation prompt information, the card 218 displays information about the in-vehicle music application, and the card 219 displays information about a current time and date.

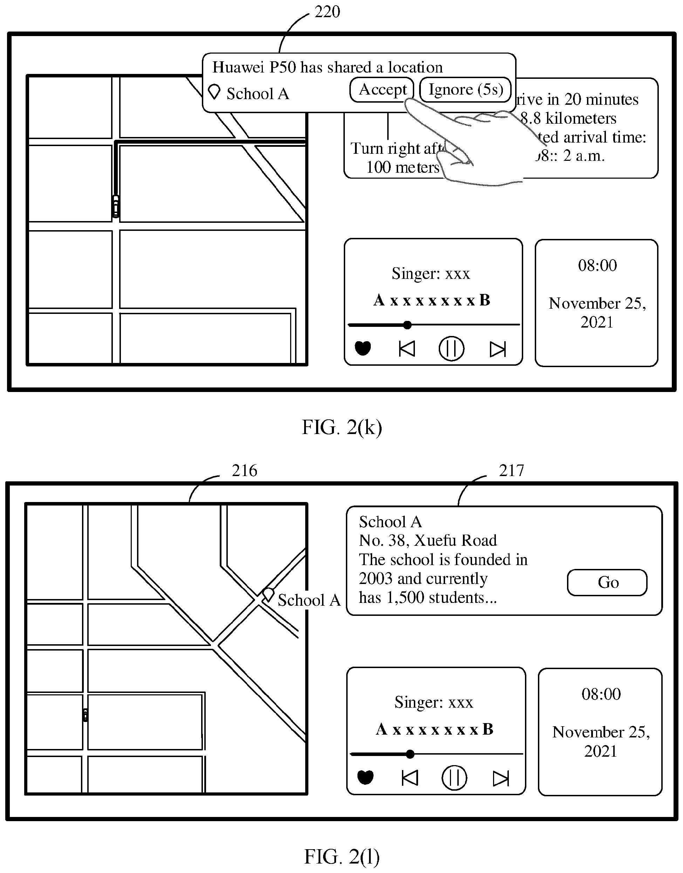

As shown in FIG. 2(k), after receiving the location information sent by the mobile phone, the vehicle may display a prompt box 220 on the central display, where the prompt box 220 includes the prompt information "Huawei P50 has shared a location School A", an "Accept" control, and an "Ignore" control.

In an embodiment, the prompt box 220 may be further displayed in the card 216 or the card 217.

As shown in FIG. 2(l), after the vehicle detects tapping of the "Accept" control by the user, the card 216 may display the location information of the school A, and the card 217 may display the introduction information of the school A.

In this embodiment of this application, when the mobile phone receives a location-related message through the social application, the mobile phone may ask the user whether to push a location to the vehicle. When the mobile phone detects an operation of determining, by the user, to push the location to the vehicle, the vehicle may display the pushed location information. In this way, the user does not need to manually enter the location information in the in-vehicle map application. Therefore, a complex input process performed when the user uses an electronic control unit for navigation is omitted. This helps improve user experience.

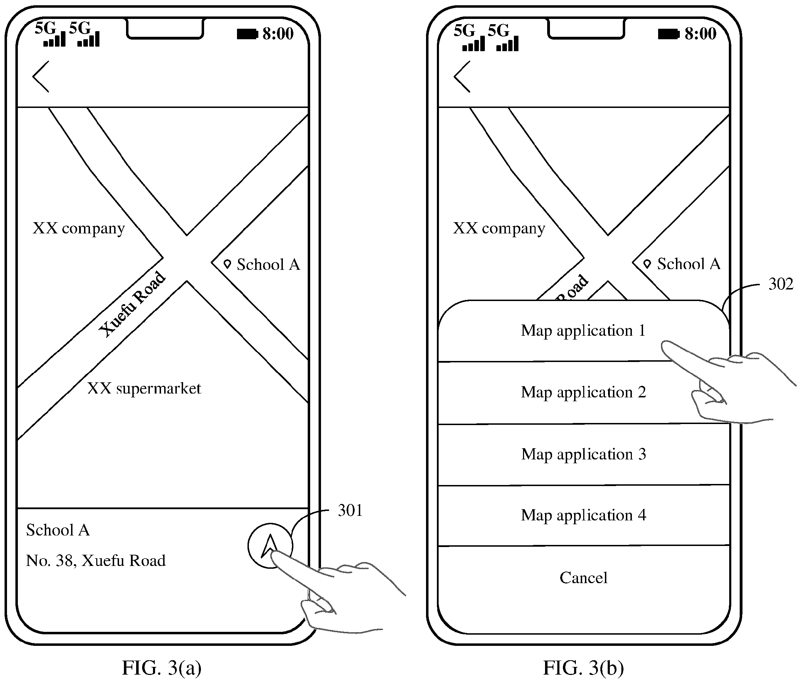

FIG. 3(a) to FIG. 3(d)-2 show another set of GUIs according to an embodiment of this application.

A GUI shown in FIG. 3(a) is a display interface of the location information of the school A on the map. The display interface includes a control 301. The control 301 is associated with a plurality of map applications (for example, a map application 1, a map application 2, a map application 3, and a map application 4).

In an embodiment, the map application 1, the map application 2, the map application 3, and the map application 4 may be map applications installed on the mobile phone.

When the mobile phone detects an operation of tapping the control 301 by the user, the mobile phone may display a GUI shown in FIG. 3(b).

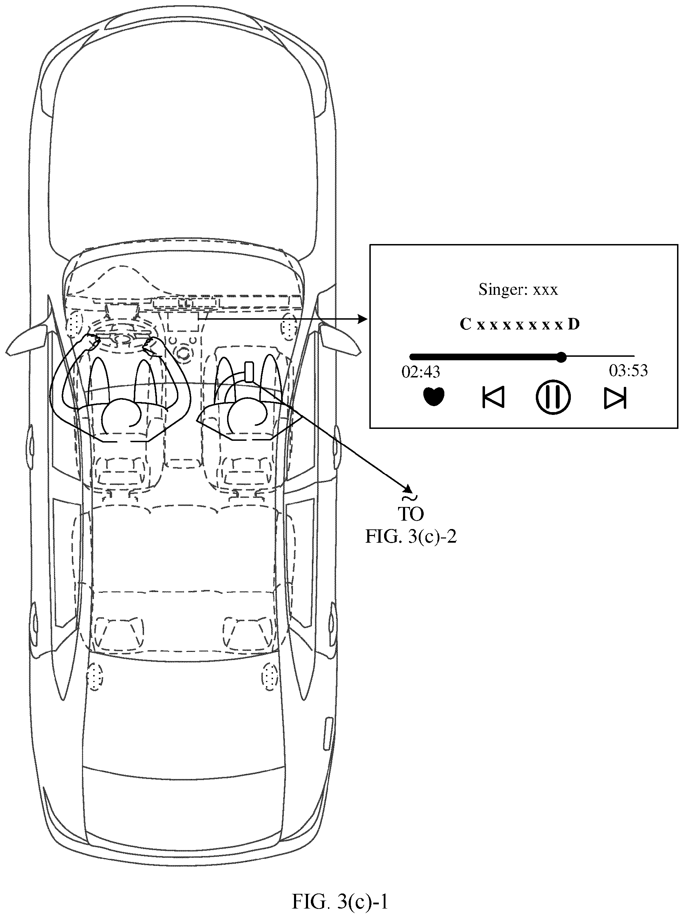

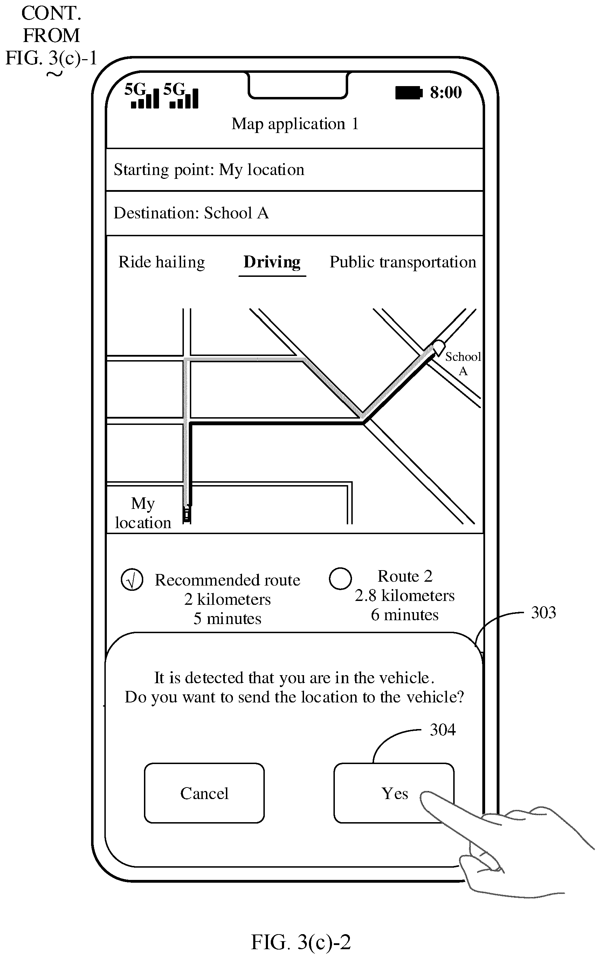

The GUI shown in FIG. 3(b) includes a prompt box 302, where the prompt box 302 includes a control for jumping to the map application 1, a control for jumping to the map application 2, a control for jumping to the map application 3, a control for jumping to the map application 4, and a "Cancel" control. When the mobile phone detects an operation of tapping by the user to jump to the map application 1, the mobile phone may display a GUI shown in FIG. 3(c)-2.

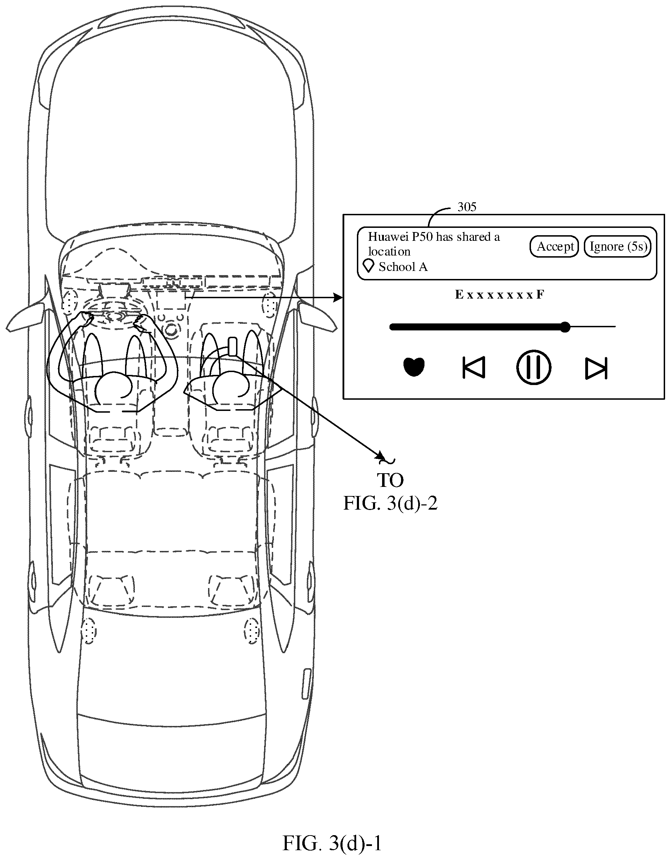

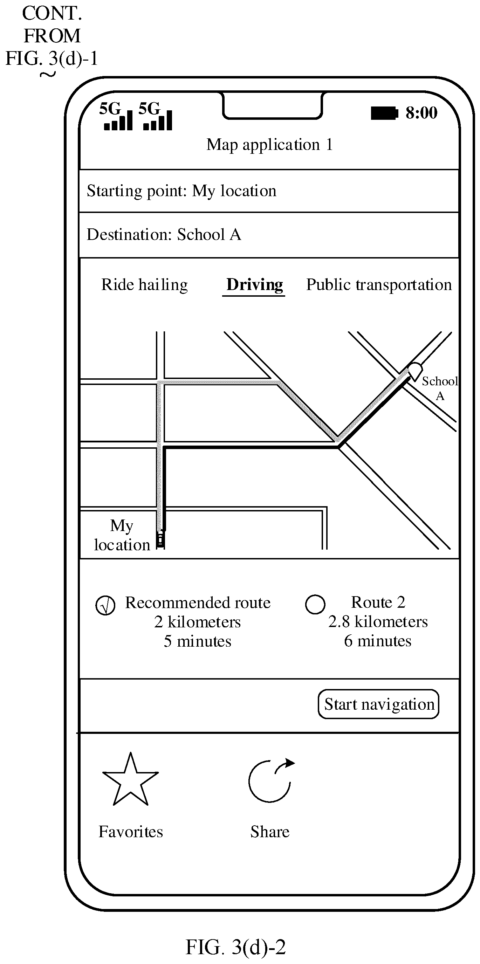

In the GUI shown in FIG. 3(c)-2, the mobile phone may display, on the map application 1, a display interface for a navigation route from the current location of the vehicle to the school A. The display interface of the navigation route may include starting point information (for example, My location), destination information (for example, School A), and a planned driving route (for example, Recommended route and Route 2). In addition, the mobile phone may display a prompt box 303, where the prompt box 303 includes prompt information "It is detected that you are in the vehicle. Do you want to send the location to the vehicle?", a "Cancel" control, and a "Yes" control 304. In this case, a music playing interface is displayed on the central display of the vehicle. The playing interface includes information about a singer (for example, xxx), information about lyrics (for example, CxxxxxxxD), a progress bar of a song (for example, duration of the song is 3 minutes 53 seconds, and a current progress of song playing is 2 minutes 43 seconds), a like, a control for playing a previous song, a control for pause, and a control for playing a next song. When the mobile phone detects an operation of tapping the control 304 by the user, the mobile phone may display a GUI shown in FIG. 3(d)-2 and the vehicle may display a GUI shown in FIG. 3(d)-1.

In a GUI shown in FIG. 3(d)-2, in response to detecting an operation of tapping the control 304 by the user, the mobile phone may send the device information of the mobile phone (for example, the model of the mobile phone, which is Huawei P50) and the location information of the school A to the vehicle. In response to receiving the device information and the location information that are sent by the mobile phone, the vehicle may display a prompt box 305 on the central display, where the prompt box 305 includes prompt information "Huawei P50 has shared a location School A", an "Accept" control, and an "Ignore" control.

In an embodiment, the prompt information in the prompt box 303 may be "It is detected that you are in the vehicle. Do you want to send the recommended route and the route 2 to the vehicle?" When the mobile phone detects an operation of tapping the control 304 by the user, the mobile phone may further send information about the recommended route and the route 2 to the vehicle. After receiving the information about the two routes, the vehicle may notify the user that "Huawei P50 has shared two routes from the current location to School A".

In an embodiment, the prompt information in the prompt box 303 may be "It is detected that you are in the vehicle. Do you want to send the recommended route to the vehicle?" When the mobile phone detects an operation of tapping the control 304 by the user, the mobile phone may further send information about the recommended route to the vehicle. After receiving the information about the recommended route, the vehicle may notify the user that "Huawei P50 has shared one route from the current location to School A".

In this embodiment of this application, when the mobile phone receives a location-related message through the social application, after detecting an operation of jumping from the social application to the map application, the mobile phone may display the location information on the map application, and ask the user whether to push a location (or route) to the vehicle. When the mobile phone detects an operation of determining, by the user, to push the location (or route) to the vehicle, the vehicle may display the pushed location (or route). In this way, the user does not need to manually enter the location information (or enter the location information and select a proper navigation route) in the in-vehicle map application. Therefore, a complex input process performed when the user uses the electronic control unit for navigation is omitted. This helps improve user experience.

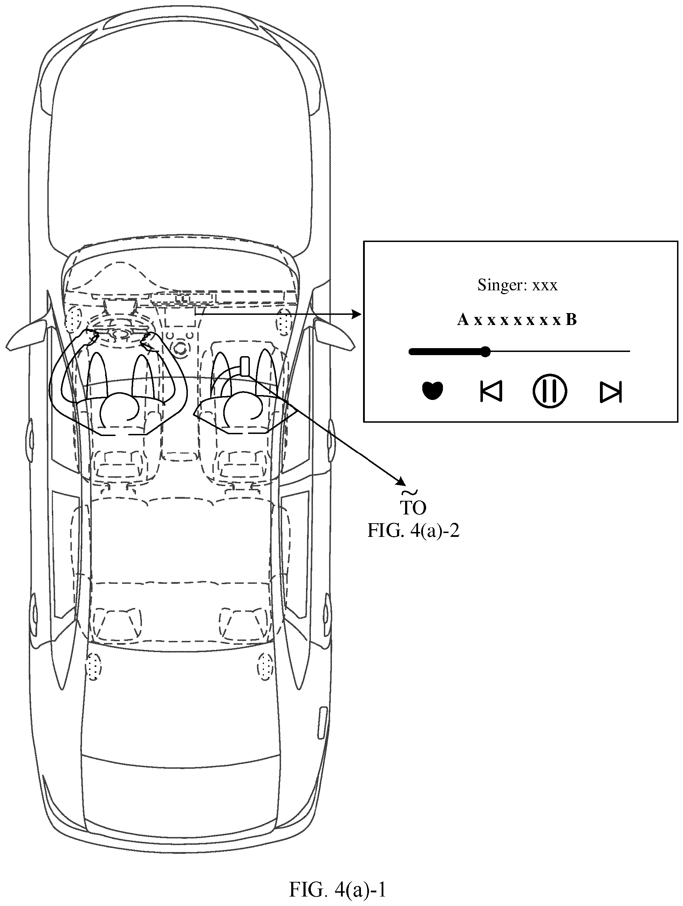

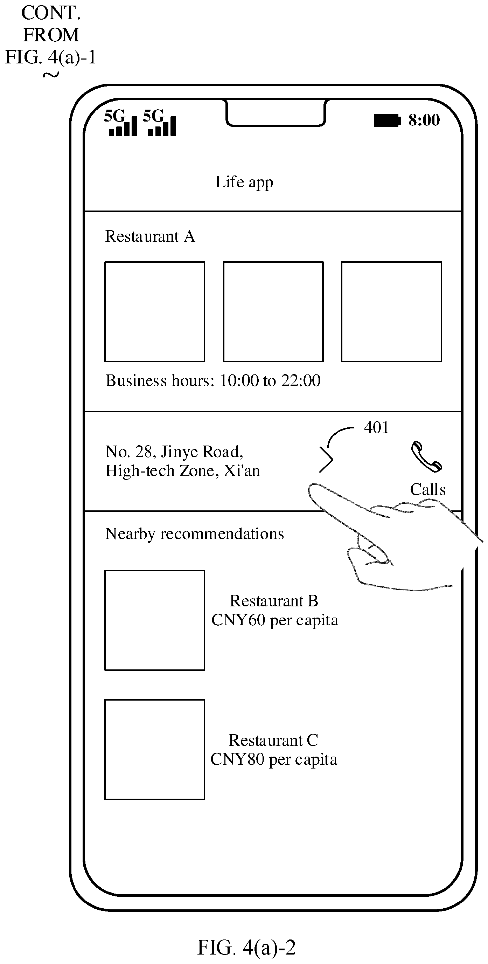

FIG. 4(a)-1 to FIG. 4(e)-2 show another set of GUIs according to an embodiment of this application.

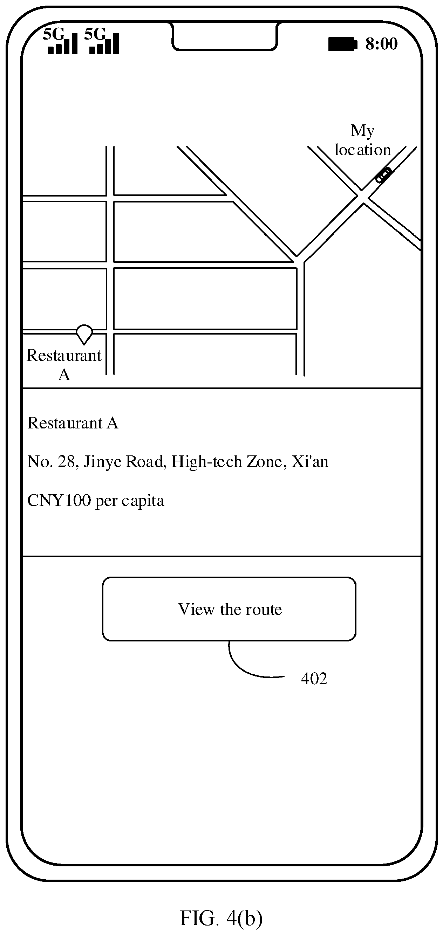

As shown in FIG. 4(a)-1, when the father (in the driver's seat) drives with the daughter (in the front passenger seat), a music playing interface is displayed on the central display of the vehicle. The playing interface includes information about a singer (for example, xxx), information about lyrics (for example, AxxxxxxxB), a progress bar of a song, a like, a control for playing a previous song, a control for pause, and a control for playing a next song. In this case, a display interface of a life application is displayed on the mobile phone of the daughter in the front passenger seat. Details about a restaurant A are displayed on the display interface. The details include business hours (for example, 10:00 to 22:00) of the restaurant A, address information 401 (for example, No. 28, Jinye Road, High-tech Zone), information about recommendations near the restaurant A, and the like. When the mobile phone detects an operation of tapping the address information 401 by the user, the mobile phone may display a GUI shown in FIG. 4(b).

In the GUI shown in FIG. 4(b), the mobile phone may display, on the life application, the location information of the restaurant A and a "View the route" control 402. The control 402 is associated with a plurality of map applications (for example, a map application 1, a map application 2, a map application 3, and a map application 4).

In an embodiment, the map application 1, the map application 2, the map application 3, and the map application 4 may be map applications installed on the mobile phone.

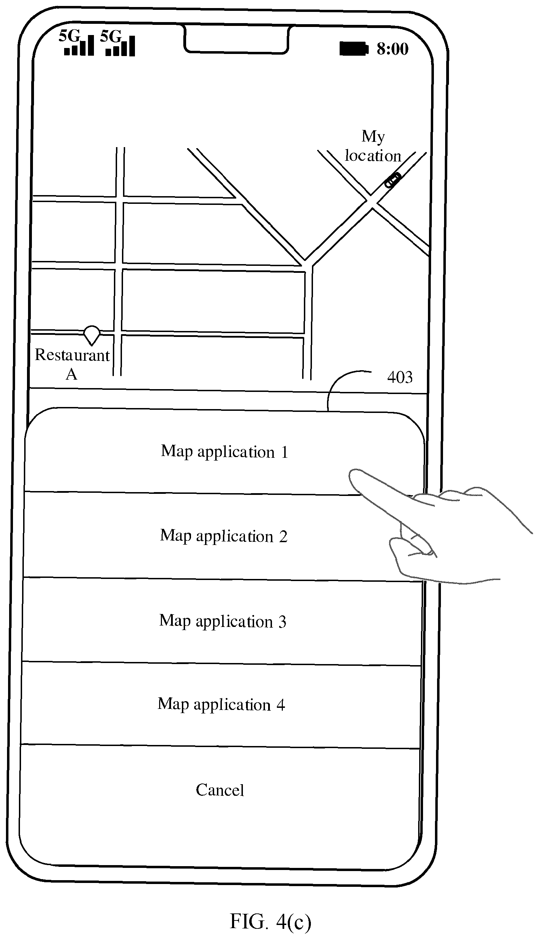

When the mobile phone detects an operation of tapping the control 402 by the user, the mobile phone may display a GUI shown in FIG. 4(c).

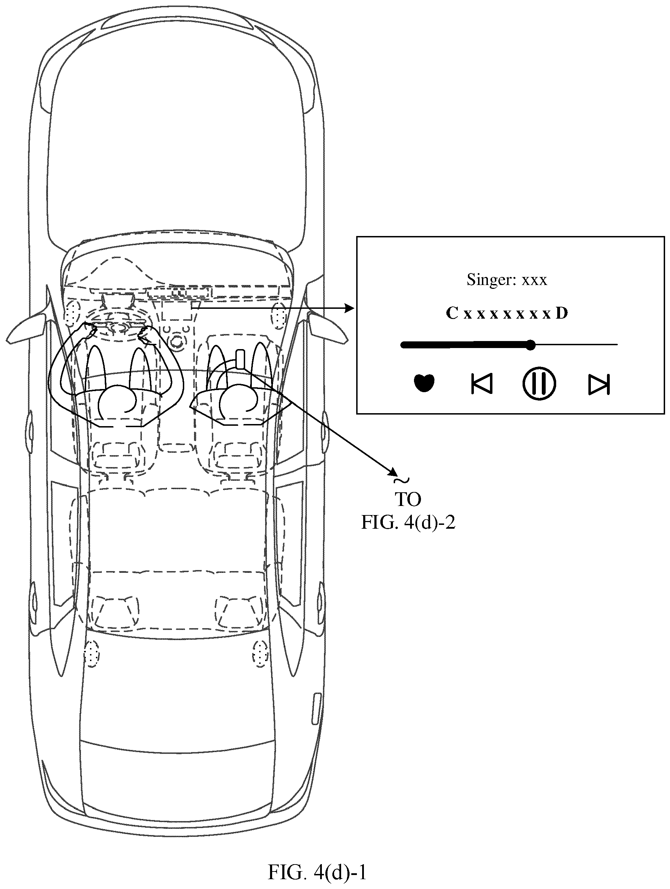

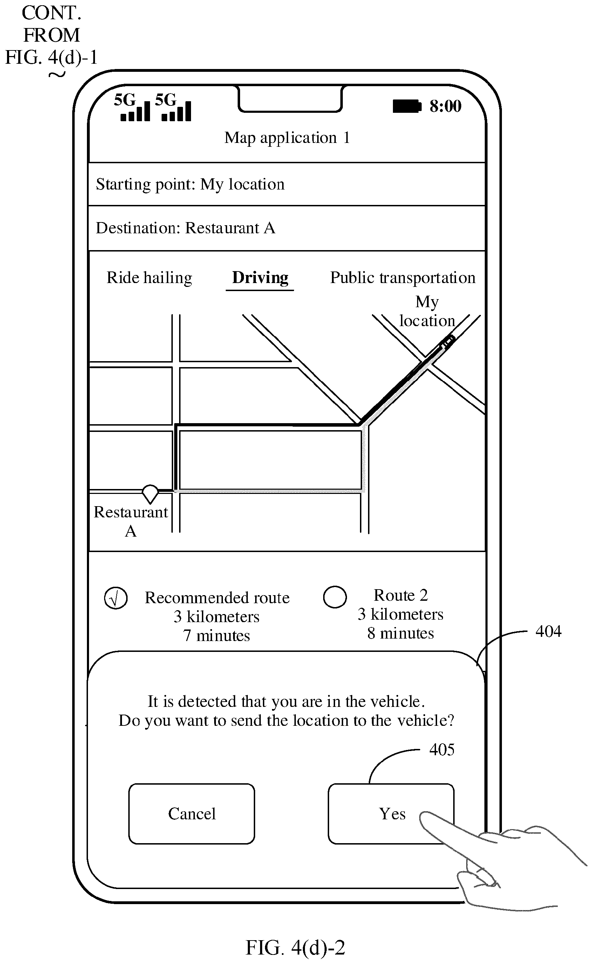

The GUI shown in FIG. 4(c) includes a prompt box 403, where the prompt box 403 includes a control for jumping to the map application 1, a control for jumping to the map application 2, a control for jumping to the map application 3, a control for jumping to the map application 4, and a "Cancel" control. When the mobile phone detects an operation of tapping by the user to jump to the map application 1, the mobile phone may display a GUI shown in FIG. 4(d)-2.

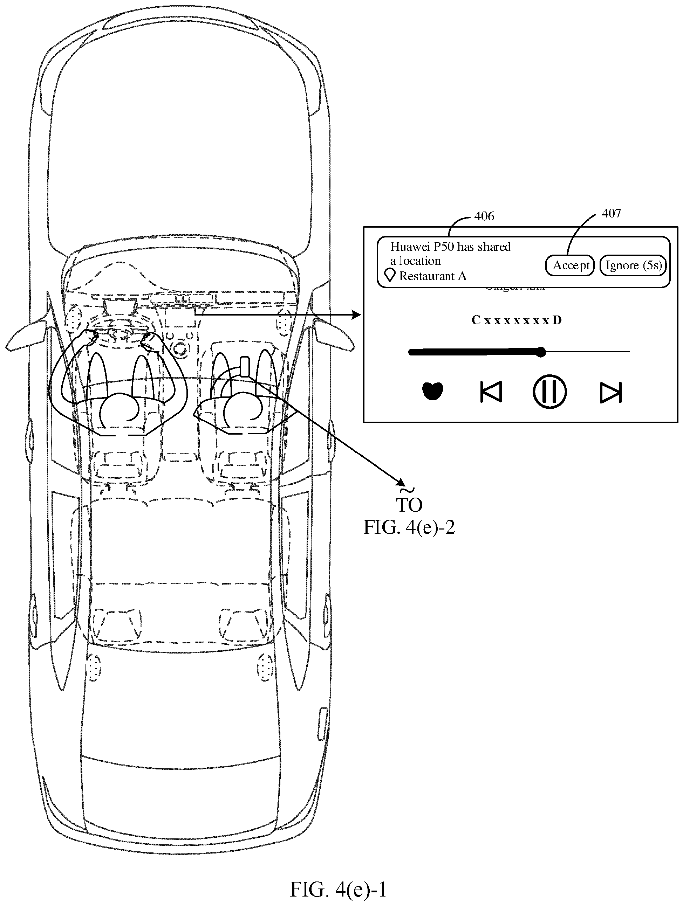

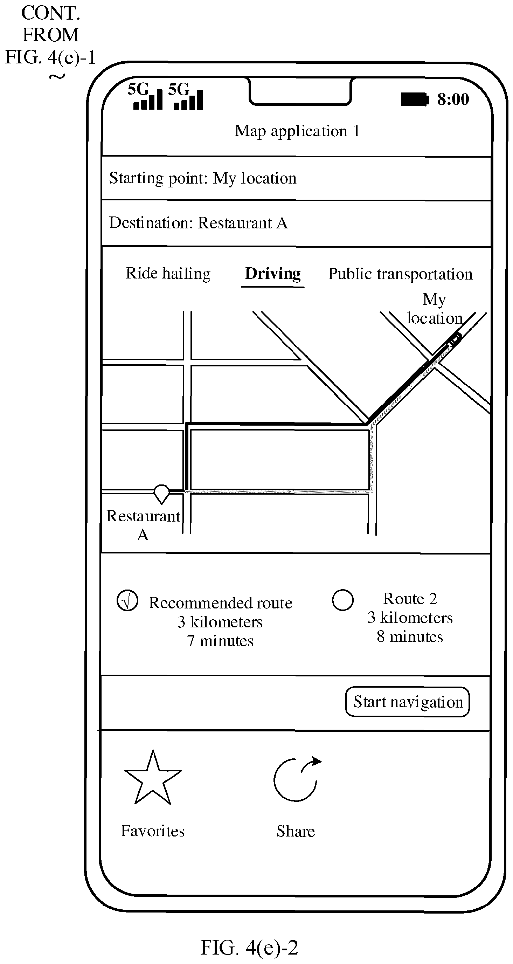

In the GUI shown in FIG. 4(d)-2, the mobile phone may display a display interface of the map application 1. The display interface may include starting point information (for example, My location), destination information (for example, School A), and a planned driving route (for example, Recommended route and Route 2). In addition, the mobile phone may display a prompt box 404, where the prompt box 404 includes prompt information "It is detected that you are in the vehicle. Do you want to send the location to the vehicle?", a "Cancel" control, and a "Yes" control 405. In this case, compared with those in the playing interface shown in FIG. 4(a)-1, the lyric information and the progress bar information are different on the music playing interface displayed on the central display of the vehicle. When the mobile phone detects an operation of tapping the control 405 by the user, the mobile phone may display a GUI shown in FIG. 4(e)-2 and the vehicle may display a GUI shown in FIG. 4(e)-1.

In the GUI shown in FIG. 4(e)-2, in response to detecting an operation of tapping the control 405 by the user, the mobile phone may send the device information of the mobile phone (for example, the model of the mobile phone, which is Huawei P50) and location information of the restaurant A to the vehicle. In response to receiving the device information and the location information that are sent by the mobile phone, the vehicle may display a prompt box 406 on the central display, where the prompt box 406 includes prompt information "Huawei P50 has shared a location Restaurant A", an "Accept" control 407, and an "Ignore" control.

In an embodiment, the prompt information in the prompt box 404 may be "It is detected that you are in the vehicle. Do you want to send the recommended route and the route 2 to the vehicle?" When the mobile phone detects an operation of tapping the control 405 by the user, the mobile phone may further send information about the recommended route and the route 2 to the vehicle. After receiving the information about the two routes, the vehicle may notify the user that "Huawei P50 has shared two routes from the current location to Restaurant A".

In an embodiment, the mobile phone may determine whether the user is in the vehicle by determining whether a connection between the mobile phone and the vehicle is established. For example, when the connection between the mobile phone and the vehicle is established, the mobile phone can determine that the user is in the vehicle.

In an embodiment, the mobile phone may also determine, based on signal strength or signal quality of a signal sent by the vehicle, whether the user is in the vehicle. For example, the mobile phone may periodically send a broadcast message to a nearby device. After receiving the broadcast message sent by the mobile phone, the vehicle may send a response message to the mobile phone. The response message may carry identification information of the vehicle. After receiving the response message, if the mobile phone determines that the signal strength or signal quality of the response message is greater than or equal to a preset value, the mobile phone can determine that the user is in the vehicle.

In an embodiment, when the vehicle determines, based on image information collected by an in-vehicle camera, that the user is located in an area (for example, the driver's seat area), the vehicle can determine identity information of the user based on the image information. For example, when the vehicle determines that facial information in the image information collected by the camera matches facial information corresponding to a first account, the vehicle can determine that a user corresponding to the first account is in the vehicle. Therefore, the vehicle may send indication information to another electronic device (for example, a mobile phone or a smartwatch) corresponding to the first account, where the indication information indicates that the user corresponding to the first account is in the vehicle.

In an embodiment, when the vehicle determines that a connection is established through a cloud server or short-distance wireless communication is established with an electronic device (for example, a mobile phone), the vehicle may send indication information to the electronic device, where the indication information indicates that a user carrying the electronic device is in the vehicle.

In an embodiment, the prompt information in the prompt box 404 may be "It is detected that you are in the vehicle. Do you want to send the recommended route to the vehicle?" When the mobile phone detects an operation of tapping the control 405 by the user, the mobile phone may further send information about the recommended route to the vehicle. After receiving the information about the recommended route, the vehicle may notify the user that "Huawei P50 has shared one route from the current location to Restaurant A".

In this embodiment of this application, when the mobile phone detects an operation of jumping from the life application to the map application, the mobile phone may display location information of the life application on the map application, and ask the user whether to push a location (or route) to the vehicle. When the mobile phone detects an operation of determining, by the user, to push the location (or route) to the vehicle, the vehicle may display the pushed location (or route). In this way, the user does not need to manually enter the location information (or enter the location information and select a proper navigation route) in the in-vehicle map application. Therefore, a complex input process performed when the user uses the electronic control unit for navigation is omitted. This helps improve user experience.

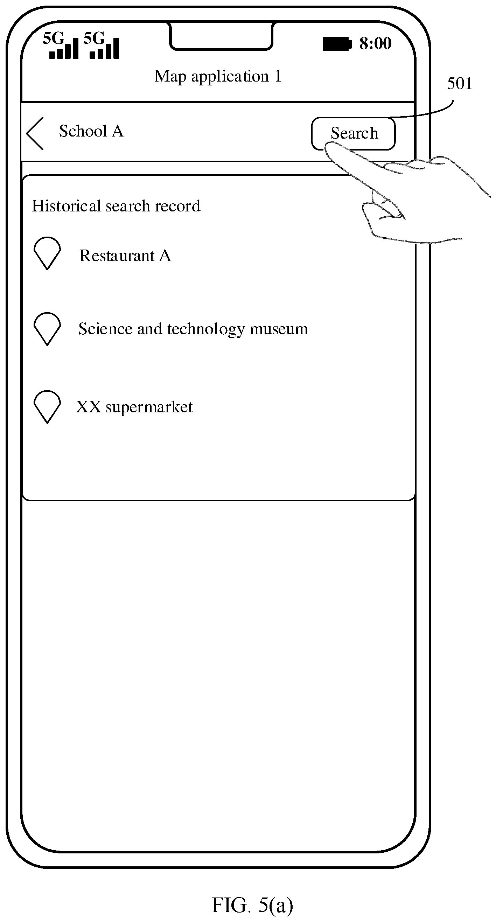

FIG. 3(a) to FIG. 3(d)-2 and FIG. 4(a)-1 and FIG. 4(e)-2 separately describe a case in which after jumping to the map application from an application (for example, the social application or the life application) on the mobile phone, the mobile phone may ask the user whether to push location information to the vehicle. The following describes, by using GUIs shown in FIG. 5(a) to FIG. 5(e) and FIG. 7(a)-1 to FIG. 7(d), a process in which the mobile phone pushes a location to the vehicle after finding the location on the map application.

FIG. 5(a) to FIG. 5(e) show another set of GUIs according to an embodiment of this application.

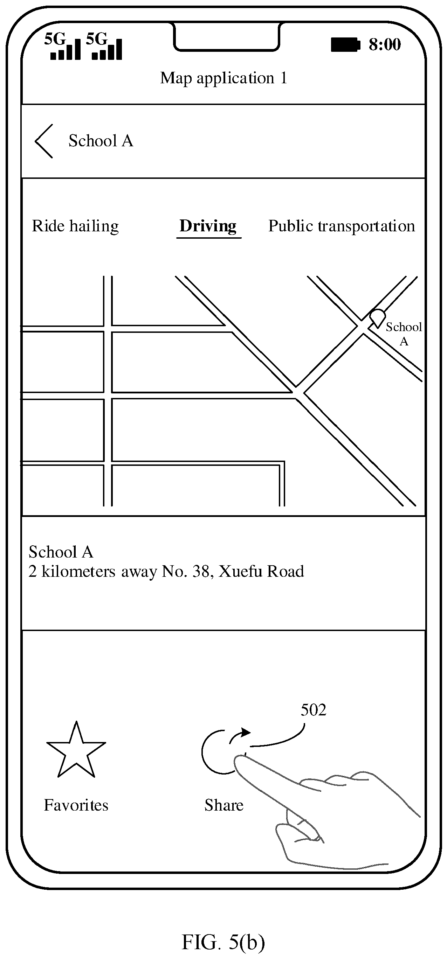

A GUI shown in FIG. 5(a) is a location search interface of a map application 1. The location search interface includes a text input box and a historical search record. When the mobile phone detects an operation of entering "School A" in the text input box and tapping a search control 501 by a user, the mobile phone may display a GUI shown in FIG. 5(b).

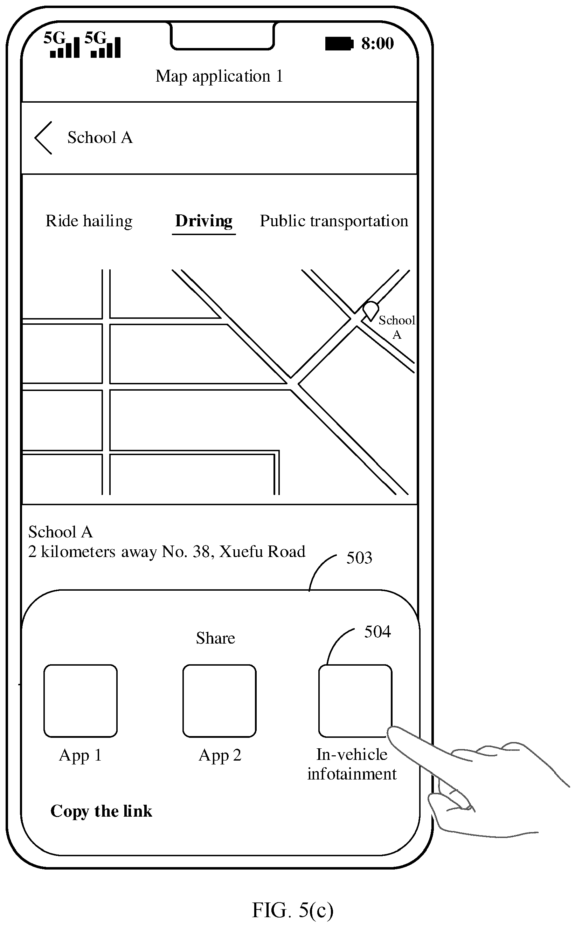

The GUI shown in FIG. 5(b) is a location display interface of the map application 1. The location display interface displays location information of the school A on a map, information about a distance between the school A and a current location of the user (for example, "2 kilometers away"), a detailed address of the school A (for example, No. 38, Xuefu Road), a "Favorites" control, and a "Share" control 502. When the mobile phone detects an operation of tapping the control 502 by the user, the mobile phone may display a GUI shown in FIG. 5(c).

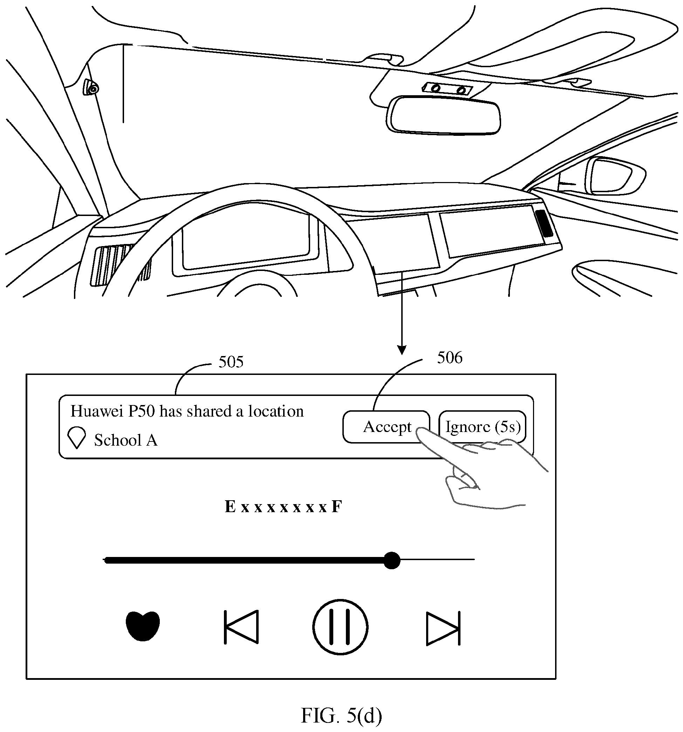

In the GUI shown in FIG. 5(c), in response to detecting the operation of tapping the control 502 by the user, the mobile phone may display a sharing window 503. The sharing window 503 includes an "App 1" icon, an "App 2" icon, an "In-vehicle infotainment" icon 504, and a "Copy the link" control. When the mobile phone detects the operation of tapping the icon 504 by the user, the mobile phone may send device information of the mobile phone and the location information of the school A. In response to receiving the information sent by the mobile phone, the vehicle may display, on the central display, a GUI shown in FIG. 5(d).

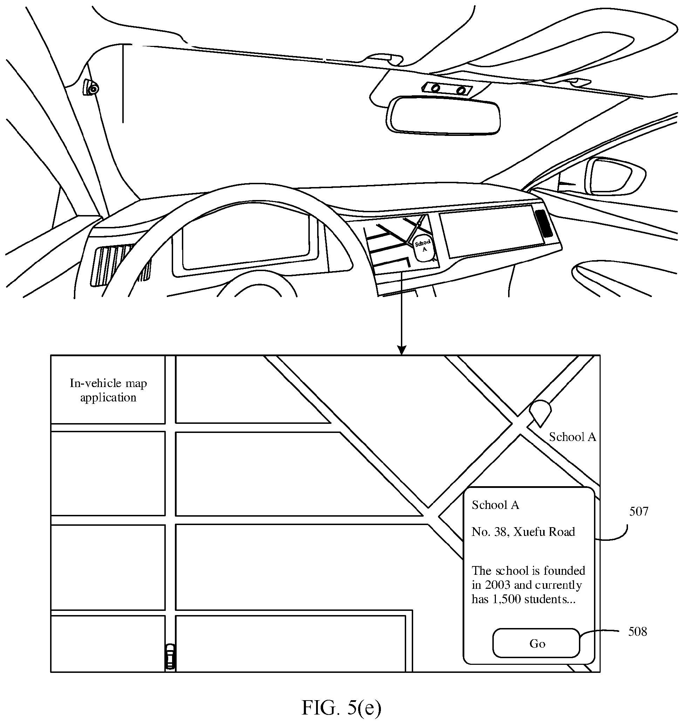

As shown in the GUI in FIG. 5(d), in response to receiving the information sent by the mobile phone, the vehicle may display a prompt box 505 on a music playing interface. The prompt box 505 includes prompt information "Huawei P50 has shared a location School A", an "Accept" control 506, and an "Ignore" control. When the vehicle detects an operation of tapping the control 506 by the user, the vehicle may display, on the central display, a GUI shown in FIG. 5(e).

As shown in the GUI in FIG. 5(e), in response to detecting the operation of tapping the control 506 by the user, the vehicle may jump from the music playing interface to a display interface of the in-vehicle map application, and display a location of the school A and a prompt box 507 on the display interface of the in-vehicle map application. The prompt box 507 includes the detailed address of the school A (for example, No. 38, Xuefu Road) and an introduction of the school A (for example, the school is founded in 2003 and currently has 1,500 students), and a control 508.

In an embodiment, when the vehicle detects an operation of tapping the control 508 by the user, the vehicle may display, on the display interface of the in-vehicle map application, information about a route from a current location of the vehicle to the school A.

In this embodiment of this application, when the user finds a location by using the map application on the mobile phone, the user may share the location with the vehicle with the "Share" control on the map application. Then the vehicle may indicate the location shared by the mobile phone. In this way, the user does not need to manually enter the location information in the in-vehicle map application. Therefore, a complex input process performed when the user uses the electronic control unit for navigation is omitted. This helps improve user experience.

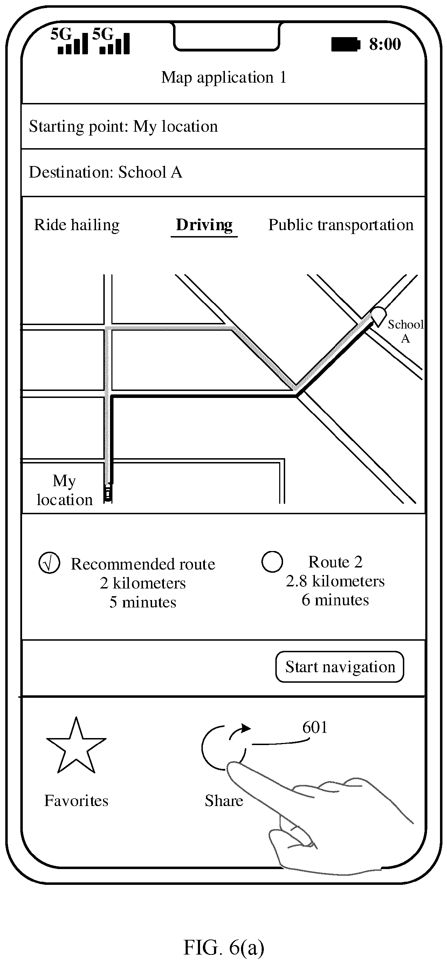

FIG. 6(a) to FIG. 6(d) show another set of GUIs according to an embodiment of this application.

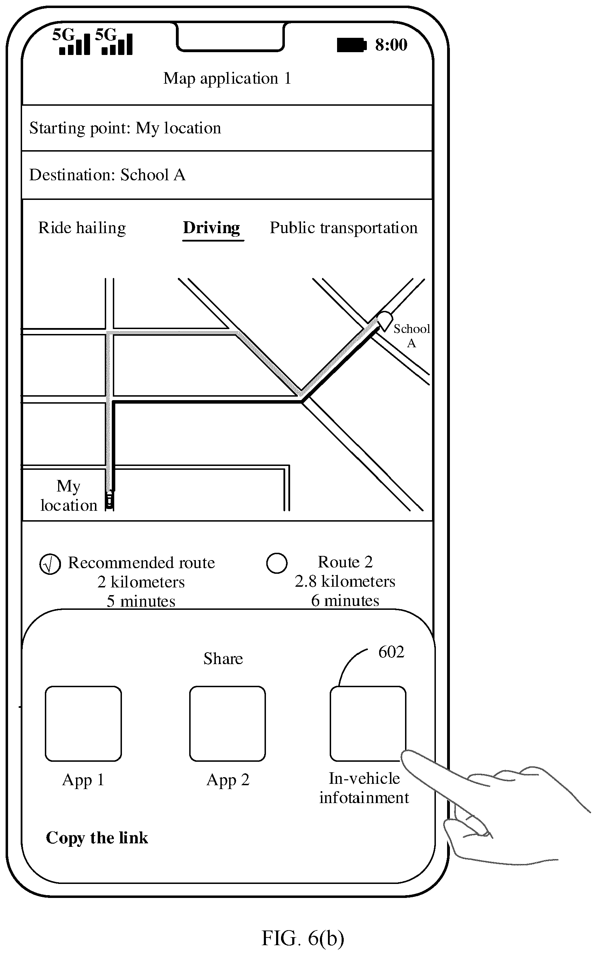

A GUI shown in FIG. 6(a) is a route search interface of a map application 1. The route search interface displays two planned routes from a starting point (for example, My location) to a destination (for example, School A), a "Favorites" control, and a "Share" control 601. The two planned routes include a recommended route (a distance from a current location to the school A is 2 kilometers and a travel time is 5 minutes) and a route 2 (a distance from the current location to the school A is 2.8 kilometers and a travel time is 6 minutes). When the mobile phone detects an operation of tapping the "Share" control 601 by the user, the mobile phone may display a GUI shown in FIG. 6(b).

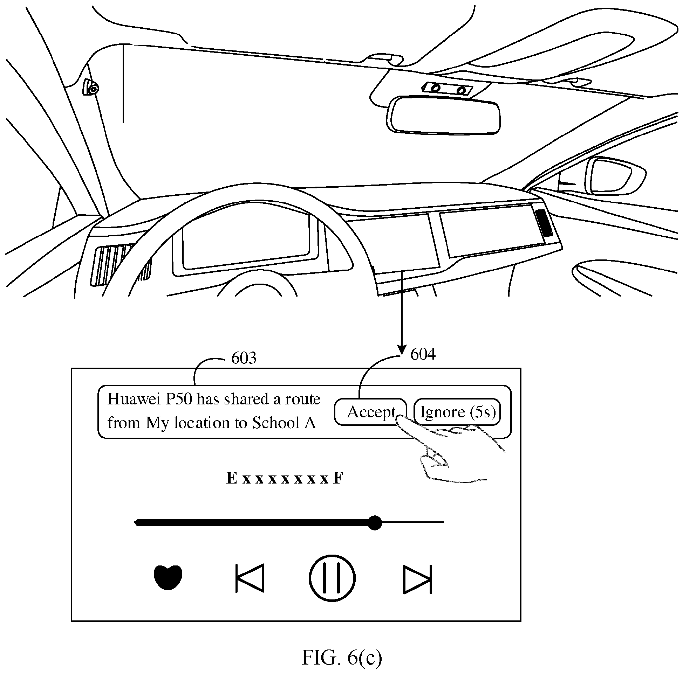

In the GUI shown in FIG. 6(b), in response to detecting the operation of tapping the control 601 by the user, the mobile phone may display a sharing window. The sharing window includes an "App 1" icon, an "App 2" icon, an "In-vehicle infotainment" icon 602, and a "Copy the link" control. When the mobile phone detects an operation of tapping the icon 602 by the user, the mobile phone may send, to the vehicle, the device information of the mobile phone and information about a route from a current location to the school A. In response to receiving the information sent by the mobile phone, the vehicle may display, on the central display, a GUI shown in FIG. 6(c).

In an embodiment, the information about the route from the current location to the school A may include information about a starting point of the route (for example, information about the current location of the user detected by the mobile phone) and information about a destination of the route (for example, School A).

In an embodiment, the information about the route from the current location to the school A may include information about the recommended route planned by the map application 1. For example, in addition to information about a route starting point (for example, information about the current location of the user detected by the mobile phone) and information about the route destination (for example, School A), the information about the recommended route may further include details about the route (for example, information about an intersection that the vehicle needs to pass when the vehicle travels from the current location to the school A and steering information at the intersection, for example, the vehicle turns right at an intersection 1 and goes straight at an intersection 2).

In an embodiment, before sending, to the vehicle, the information about the route from the current location to the school A, the mobile phone may determine whether the in-vehicle map application installed on the vehicle and the map application 1 on the mobile phone are a same application. If the applications are the same application, the mobile phone may send, to the vehicle, the information about the route starting point, the information about the route destination, and the details about the route. If the applications are not the same application, the mobile phone may send, to the vehicle, the information about the route starting point and the information about the route destination.

In an embodiment, considering a time difference between a moment at which the mobile phone sends information to the vehicle and a moment at which the vehicle receives the information sent by the mobile phone, specific location information may not be carried in the information about the starting point sent by the mobile phone to the vehicle. When receiving the information sent by the mobile phone, the vehicle may use a location of the vehicle corresponding to a moment at which the vehicle receives the information as a starting point location; or the vehicle may use a location of the vehicle corresponding to a moment at which the vehicle detects tapping of the control 604 by the user as the starting point location.

In an embodiment, if the user searches for a route from a specific starting point location (for example, Restaurant A) to a destination location (for example, School A) by using the mobile phone, the mobile phone may send information about the specific starting point location and the destination location when sharing the route with the vehicle.

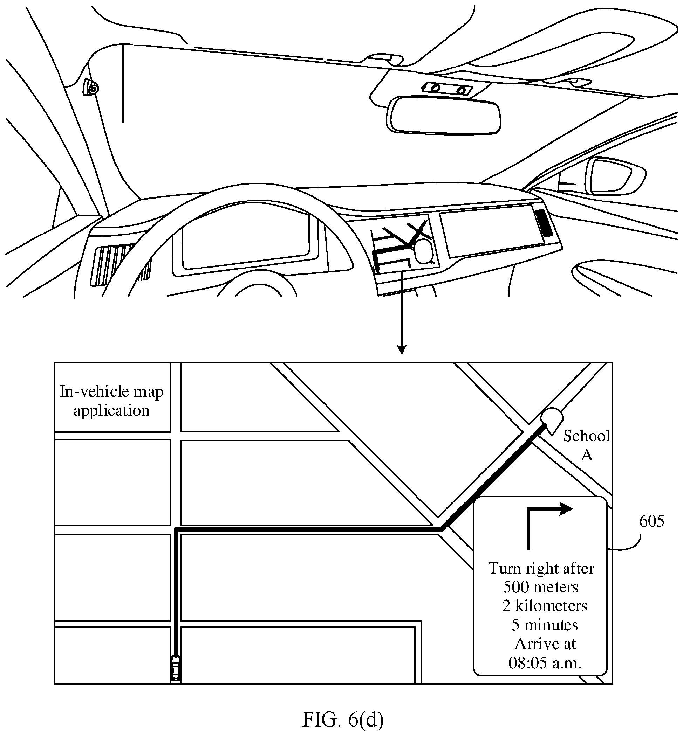

As shown in the GUI in FIG. 6(c), in response to receiving the information sent by the mobile phone, the vehicle may display a prompt box 603 on a music playing interface. The prompt box 603 includes prompt information "Huawei P50 has shared a route", an "Accept" control 604, and an "Ignore" control. When the vehicle detects an operation of tapping the control 604 by the user, the vehicle may display, on the central display, a GUI shown in FIG. 6(d).

In the GUI shown in FIG. 6(d), in response to detecting an operation of tapping the control 604 by the user, the vehicle may jump from the music playing interface to a navigation-route display interface of the in-vehicle map application, and display a prompt box 605 on the navigation-route display interface. The prompt box 605 may indicate the user to turn right after 500 meters and indicate that the current location is 2 kilometers away from the school A and that a time of arriving at the school A in 5 minutes is 08:05 a.m.

In this embodiment of this application, when the user finds a route by using the map application on the mobile phone, the user may share the route with the vehicle with the "Share" control on the map application. Then the vehicle may indicate the route shared by the mobile phone. In this way, the user does not need to manually enter location information of a starting point and a destination in the in-vehicle map application. In addition, the user does not need to select a route. Therefore, a complex input process performed when the user uses the electronic control unit for navigation is omitted. This helps improve user experience.

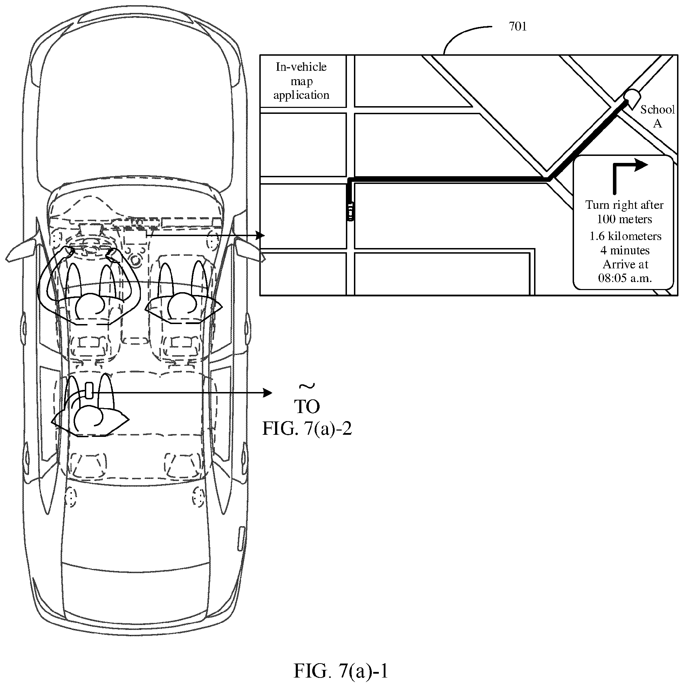

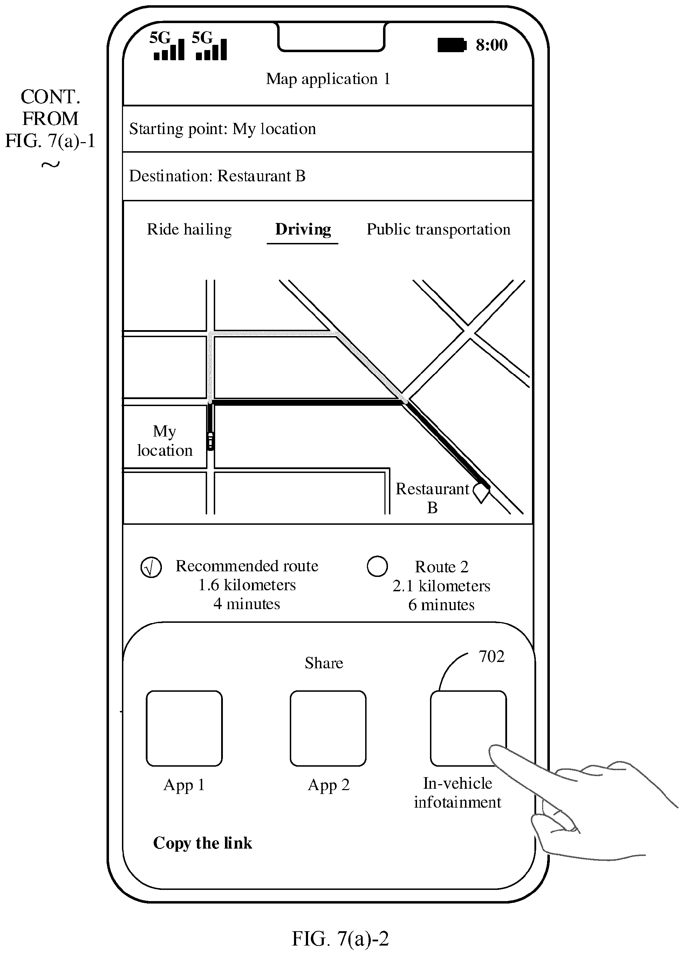

FIG. 7(a)-1 to FIG. 7(d) show another set of GUIs according to an embodiment of this application.

As shown in FIG. 7(a)-1, when the father (in the driver's seat) drives with the daughter (in a front passenger seat) and a mother (in a left area of a second row), a display interface 701 of the in-vehicle map application is displayed on the central display of the vehicle. The display interface 701 displays a navigation route from a current location of the vehicle to a school A and a navigation information prompt box. The navigation information prompt box indicates the user to turn right after 100 meters, and indicates that the current location is 1.6 kilometers away from the school A and that a time of arriving at the school A in 4 minutes is 08:05 a.m.

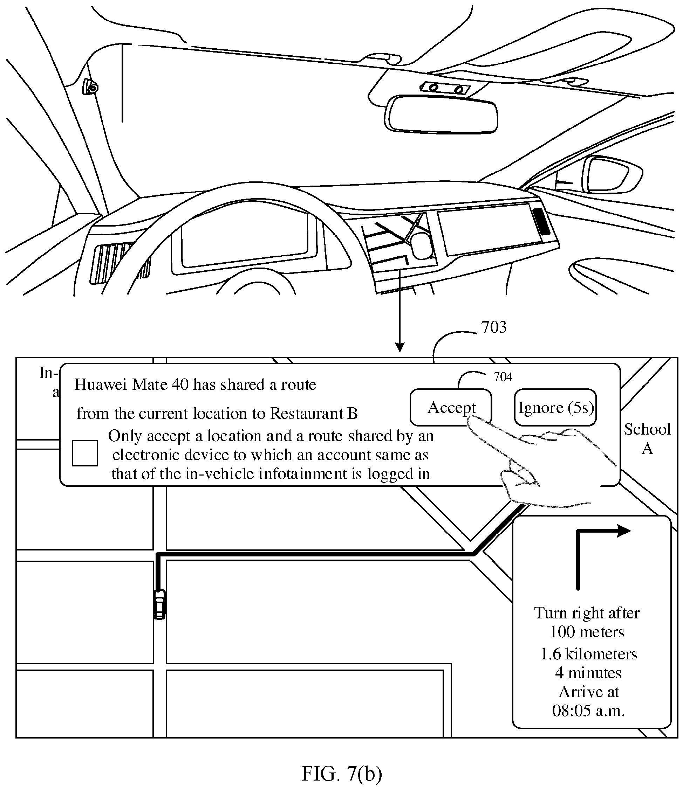

While driving, the mother wants to change the destination. For example, the mother wants to change the destination to a restaurant A. The mother may use a map application 1 on the mobile phone to search for information about a route from a current location to the restaurant A, and the mobile phone may display a display interface of the map application 1. The display interface may display two planned routes from a current location of the mobile phone to the restaurant A. When the mobile phone detects an operation of choosing to share the route by the user, the mobile phone may display a sharing window. The sharing window includes an "App 1" icon, an "App 2" icon, an "In-vehicle infotainment" icon 702, and a "Copy the link" control. When the mobile phone detects an operation of tapping the icon 702 by the user, the mobile phone may send, to the vehicle, the device information of the mobile phone (for example, the model of the mobile phone is Huawei Mate 40) and information about the route from the current location to the restaurant A. In response to receiving the information sent by the mobile phone, the vehicle may display, on the central display, a GUI shown in FIG. 7(b).

In the GUI shown in FIG. 7(b), in response to receiving the information sent by the mobile phone, the vehicle may display a prompt box 703 on the central display. The prompt box 703 includes prompt information "Huawei Mate 40 has shared a route from the current location to Restaurant A", an "Accept" control 704, and an "Ignore" control.

In an embodiment, the information sent by the mobile phone to the vehicle may further include account information of the mobile phone, and the prompt box further includes a check box indicating whether to only accept a location and a route shared by an electronic device to which an account same as that of the vehicle is logged in.

For example, an account logged in to the vehicle is an account 1 (for example, a Huawei account of the father). When the check box is selected, the vehicle may respond only to location and route information shared by another electronic device to which the account 1 is logged in, and does not respond to location and route information shared by an electronic device to which another account is logged in. In this way, even if an electronic device to which another account (for example, a Huawei account of the mother) is logged in sends location and route information to the vehicle through sharing, the vehicle may not display a corresponding prompt box.

When the check box is not selected, the vehicle may accept the location and route information shared by the electronic device to which the account 1 is logged in and location and route information shared by another account other than the account 1. For example, when the mother uses a mobile phone to which an account 2 is logged in for sending the route information to the vehicle through sharing, the vehicle may also display a corresponding prompt box.

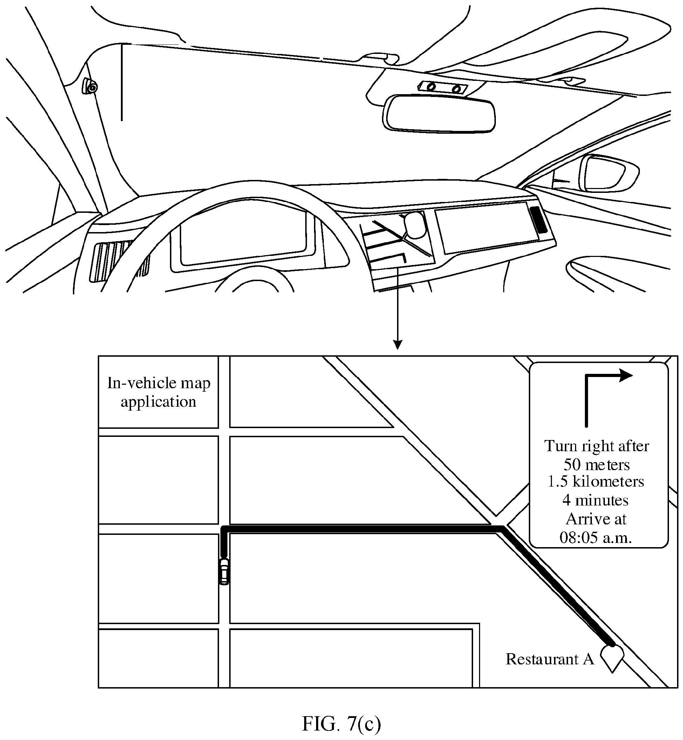

When the mobile phone detects an operation of tapping the control 704 by the user, the vehicle may display, on the central display, a GUI shown in FIG. 7(c).

As shown in FIG. 7(c), in response to detecting the operation of tapping the control 704 by the user, the vehicle may switch, on the in-vehicle map application, from a display interface of the navigation route between the current location and the school A to a display interface of the navigation route between the current location and the restaurant A. The display interface of the navigation route from the current location to the restaurant A further includes a navigation information prompt box. The navigation information prompt box indicates the user to turn right after 50 meters, and indicates that the current location is 1.5 kilometers away from the restaurant A and that a time of arriving at the restaurant A in 4 minutes is 08:05 a.m.

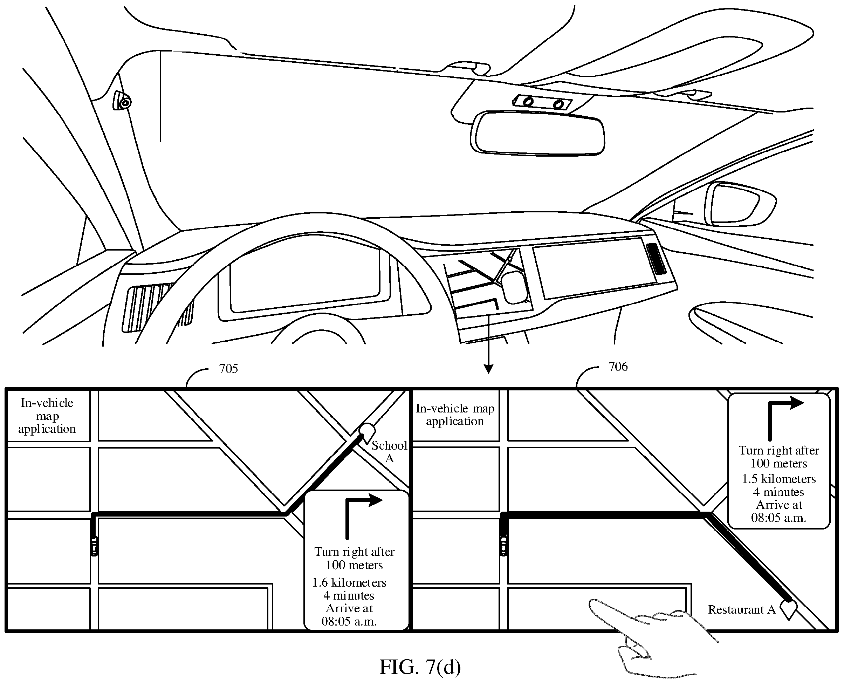

In an embodiment, when detecting the operation of tapping the control 704 by the user, the vehicle may perform split-screen display to display a navigation-route display interface before switching and a navigation-route display interface after switching. As shown in FIG. 7(d), in response to detecting an operation of tapping the control 704 by the user, the vehicle may display a window 705 and a window 706 on the central display. The window 705 may display the navigation route from the current location of the vehicle to the school A before route switching and a navigation information prompt box. The window 706 may display the navigation route from the current location to the restaurant A after route switching and a navigation information prompt box. When the vehicle detects an operation of tapping the window 706 by the user, the vehicle may display, on the central display, a GUI shown in FIG. 7(c).

In an embodiment, when receiving the information about the route from the current location to the restaurant A sent by the mobile phone, the vehicle may not display the prompt box 703, but directly display the window 705 and the window 706 shown in FIG. 7(d). When the vehicle detects the operation of tapping the window 706 by the user, the vehicle may display, on the central display, the GUI shown in FIG. 7(c).

In an embodiment, after the vehicle displays the window 705 and the window 706 on the central display, if the vehicle detects that the vehicle travels along the navigation route in the window 706, the vehicle may switch to display of the GUI shown in FIG. 7(c) on the central display. For another example, after the vehicle displays the window 705 and the window 706 on the central display, if the vehicle detects that the vehicle travels along the navigation route in the window 705, the vehicle may switch to display of the navigation route from the current location of the vehicle to the school A on the central display.

In an embodiment, when displaying the music playing interface on the central display, if the vehicle receives the information about the route from the current location to the restaurant A sent by the mobile phone, the vehicle may display the music playing interface and the navigation route from the current location to the restaurant A in different windows. When the vehicle detects an operation of tapping, by the user, the window for displaying the navigation route from the current location to the restaurant A, the vehicle may switch to display of the GUI shown in FIG. 7(c) on the central display.

In an embodiment, the vehicle may include a liquid crystal dashboard and a central display. When the vehicle displays the music playing interface and the navigation route from the current location to the restaurant A on the central display, if the vehicle detects a preset operation (for example, a three-finger slide or an air gesture) of the user on the central display, the vehicle may display the navigation route from the current location to the restaurant A on the liquid crystal dashboard, and display the music playing interface in full screen on the central display.

For another example, if the vehicle detects a preset operation of the user in the window that displays the navigation route from the current location to the restaurant A, the vehicle may display, on the liquid crystal dashboard, the display interface of the navigation route from the current location to the restaurant A, and display the music playing interface on the central display.

In an embodiment, if the vehicle detects a preset operation (for example, a three-finger slide or an air gesture) of the user on the central display, the vehicle may display, on a head up display (head up display, HUD) apparatus, the display interface of the navigation route from the current location to the restaurant A, and display the music playing interface on the central display.

In an embodiment, the vehicle may include the central display and a front-passenger display. When displaying the music playing interface on the central display, if the vehicle receives the information about the route from the current location to the restaurant A sent by the mobile phone (in this case, the front-passenger display may be in an off state), the vehicle may continue to display the music playing interface on the central display, turn on the front-passenger display, and display, on the front-passenger display, the display interface of the navigation route from the current location to the restaurant A. When the vehicle detects a preset operation of the user on the front-passenger display, the vehicle may switch content displayed on the central display and the front-passenger display, in other words, display, on the central display, the display interface of the navigation route from the current location to the restaurant A, and display the music playing interface on the front-passenger display. Alternatively, when the vehicle detects a preset operation of the user on the front-passenger display, the vehicle may display, on the central display and the front-passenger display, the display interface of the navigation route from the current location to the restaurant A. For example, the vehicle may display the navigation route on the central display and display prompt information corresponding to the navigation route on the front-passenger display.

It should be understood that the liquid crystal dashboard, the central display, and the front-passenger display in embodiments of this application may form one screen. The screen may be divided into the liquid crystal dashboard, the central display, and the front-passenger display based on respective areas. Alternatively, the liquid crystal dashboard, the central display, and the front-passenger display may form two independent screens. For example, the liquid crystal dashboard and the central display form one screen, and the screen may be divided into the liquid crystal dashboard and the central display based on respective areas. The front-passenger display form another screen. The two screens may be spliced together or may not be spliced together. Alternatively, the liquid crystal dashboard, the central display, and the front-passenger display may be three independent screens. The three screens may be spliced together or may not be spliced together. This is not limited in embodiments of this application.

In an embodiment, after receiving the route information sent by the mobile phone and detecting an operation that is performed by the user and that is of accepting the route information, the vehicle may display a plurality of planned routes from the current location of the vehicle to the restaurant A. When detecting an operation of selecting a specific planned route from the plurality of planned routes by the user, the vehicle may display navigation information based on the planned route selected by the user. Alternatively, after receiving the route information sent by the mobile phone and detecting an operation that is performed by the user and that is of accepting the route information, the vehicle may directly display navigation information for driving along a recommended route planned by the in-vehicle map application, so that the user does not need to select a planned route.

In this embodiment of this application, in a case where information about another route is received when the central display of the vehicle displays navigation information of a specific route, the vehicle may switch to display of navigation information of the another route when detecting an operation of determining, by the user, to switch a route. In this way, the user does not need to enter destination information of the another route in the in-vehicle map application and select a navigation route. Therefore, a complex input process performed when the user uses the electronic control unit for navigation is omitted. This helps improve user experience.

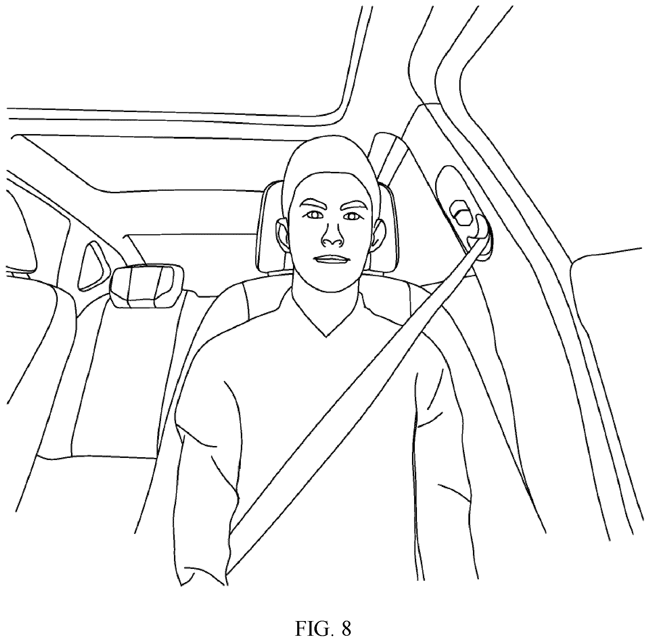

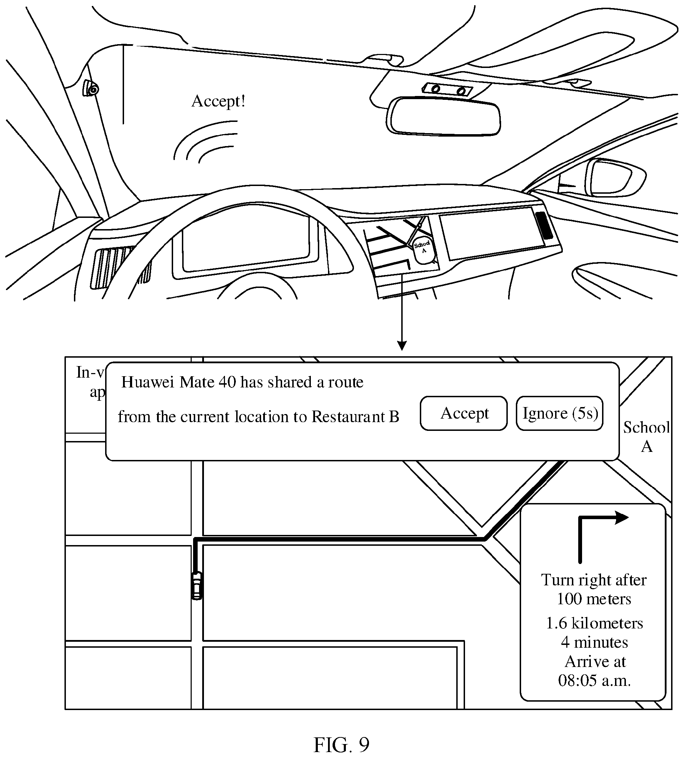

With reference to FIG. 8 and FIG. 9, the following describes a process in which the vehicle determines, by identifying physiological feature information of the user, whether to switch a route.

As shown in FIG. 8, after receiving a new route sent by the mobile phone, the vehicle may enable a camera in a cabin to collect in-cabin image information. The vehicle may identify, by using the camera in the cabin, that the user in the driver's seat taps an "Accept" control on the central display. When determining that facial feature information in the image information matches facial feature information preset in the vehicle, the vehicle switches, on the in-vehicle map application, from display of the display interface of the navigation route between the current location and the school A to display of the display interface of the navigation route between the current location and the restaurant A.

For example, the facial information preset in the vehicle is facial information of the father. The vehicle may switch to display of the display interface of the navigation route from the current location to the restaurant A when the vehicle determines, based on the image information collected by the camera, that the user in the driver's seat taps the "Accept" control on the central display, and determines, based on the image information, that the facial feature information of the user in the driver's seat matches the facial feature information preset in the vehicle.

For another example, the facial feature information preset in the vehicle is facial feature information of the daughter. The vehicle may switch to display of the display interface of the navigation route from the current location to the restaurant A when the vehicle determines, based on the image information collected by the camera, that the user in the front passenger seat taps the "Accept" control on the central display, and determines, based on the image information, that facial feature information of the user in the front passenger seat matches the facial feature information preset in the vehicle.

As shown in FIG. 9, after receiving a new route sent by the mobile phone, the vehicle may enable a microphone to collect a speech instruction sent by the user. When receiving a speech instruction "Accept" of the user, the vehicle may analyze voiceprint information of the speech instruction. If the voiceprint information of the voice instruction matches voiceprint information preset in the vehicle, the vehicle switches, on the in-vehicle map application, from display of the display interface of the navigation route between the current location and the school A to display of the display interface of the navigation route between the current location and the restaurant A.

For example, the voiceprint information preset in the vehicle is voiceprint information of the father. When the vehicle determines that the voiceprint information corresponding to the voice instruction matches the voiceprint information of the father preset in the vehicle, the vehicle may switch to display of the display interface of the navigation route from the current location to the restaurant A.

For another example, the voiceprint information preset in the vehicle is voiceprint information of the father and the mother. When the vehicle determines that the voiceprint information corresponding to the voice instruction matches the voiceprint information of the mother preset in the vehicle, the vehicle may switch to display of the display interface of the navigation route from the current location to the restaurant A.

In an embodiment, the vehicle may further determine, by using a microphone array and the camera together, whether to switch a route. For example, after receiving the new route sent by the mobile phone, the vehicle may determine, by using the microphone array, that a user on the left side of the second row sends the voice instruction "Accept!" In this case, the vehicle may collect image information of the user on the left side of the second row by using the camera. If facial feature information in the image information of the user on the left side of the second row matches the facial feature information preset in the vehicle (for example, the facial feature information of the mother is preset in the vehicle), the vehicle may switch to display of the display interface of the navigation route from the current location to the restaurant A.

The foregoing describes several sets of GUIs provided in embodiments of this application with reference to FIG. 2(a)-1 to FIG. 9. The following describes a process of interaction between a mobile phone and a vehicle in embodiments of this application with reference to accompanying drawings.

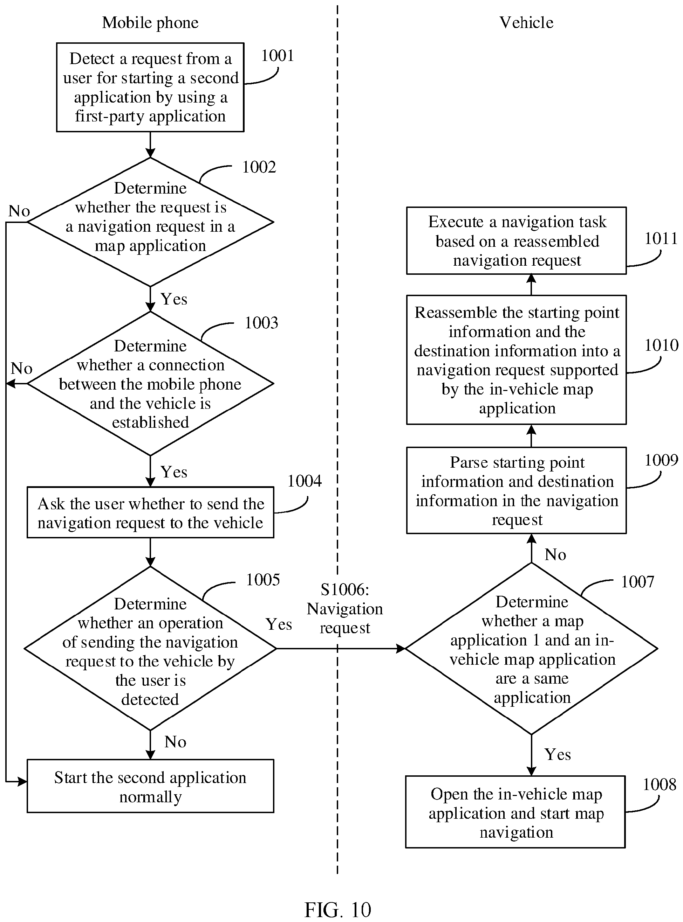

FIG. 10 is a schematic flowchart of a method 1000 for interaction between a mobile phone and a vehicle according to an embodiment of this application. As shown in FIG. 10, the method 1000 includes the following steps.

S1001: The mobile phone detects a request from a user for starting a second application by using a first-party application.

For example, the first application may be the foregoing social application, life application, or the like.

For example, the second application may be a map-related application like the foregoing map application 1, map application 2, map application 3, or map application 4.

For example, as shown in FIG. 3(b), when the mobile phone detects, on the display interface of the social application, the operation of choosing to jump to the map application 1 by the user, the mobile phone may determine that a request from the user for starting the map application 1 by using the social application is detected.

For example, as shown in FIG. 4(c), when the mobile phone detects, on the display interface of the life application, the operation of choosing to jump to the map application 1 by the user, the mobile phone may determine that a request from the user for starting the map application 1 by using the life application is detected.

S1002: The mobile phone determines whether the request is a navigation request in the map application.

For example, the mobile phone may determine, based on attribute information in the request, whether the request is a navigation request in the map application. For example, the navigation request may include four attributes: an action (action), a category (category), uniform resource identifier data (uniform resource identifier data, uri-data), and a package name (package). The action attribute may be fixed (for example, android.intent.action.VIEW), and the category attribute may also be fixed (for example, android.intent.category.DEFAULT).

The uri-data attribute is a character string. Content in different map applications may be different. For example, uri-data of the map application 1 may start with "yingyong1://map", and includes a starting point latitude (starting point latitude, slat), a starting point longitude (starting point longitude, slon), a starting point name (starting point name, sname), a destination latitude (destination latitude, dlat), a destination longitude (destination longitude, dlon), and a destination name (destination name, dname).

The package is a package name of the map application. Package names of different map applications may be different. For example, a package name of the map application 1 may be com.yingyong1.map, and a package name of the map application 2 may be com.yingyong 2.map.

In this embodiment of this application, the mobile phone may determine, by parsing the attribute information in the request, whether the request is the navigation request in the map application. For example, when determining that the action attribute in the request is android.intent.action.VIEW, the mobile phone can determine that the request is the navigation request in the map application.

For another example, when determining that the category attribute in the request is android.intent.category.DEFAULT, the mobile phone can determine that the request is the navigation request in the map application.

For another example, when the mobile phone determines that the uri-data attribute in the request includes the starting point information (for example, the starting point longitude, the starting point latitude, and the starting point name) and the destination information (for example, the destination longitude, the destination latitude, and the destination name), the mobile phone can determine that the request is the navigation request in the map application.

For another example, when determining that the package attribute in the request is the package name of the map application, the mobile phone can determine that the request is the navigation request in the map application.

In an embodiment, if the mobile phone determines that the request is the navigation request in the map application, S1003 is performed; otherwise, the mobile phone may normally start the second application.

S1003: Determine whether a connection between the mobile phone and the vehicle is established.

For example, the mobile phone may determine whether a Bluetooth connection with the vehicle is currently established. For example, the mobile phone may query, from a list of currently connected Bluetooth devices, whether information about the vehicle is included. If the list of the connected devices includes the information about the vehicle, it can be determined that the Bluetooth connection between the mobile phone and the vehicle is established; otherwise, the mobile phone can determine that the connection with the vehicle is not established.

In an embodiment, if the mobile phone determines that the connection with the vehicle is established, S1004 is performed; otherwise, the mobile phone may normally start the second application.

S1004: The mobile phone asks the user whether to send the navigation request to the vehicle.

For example, as shown in FIG. 3(c)-2, when the mobile phone determines that the request is the navigation request and the connection between the mobile phone and the vehicle is established, the mobile phone may ask the user "It is detected that you are in the vehicle. Do you want to send the location to the vehicle?"

S1005: The mobile phone determines whether an operation of sending the navigation request to the vehicle by the user is detected.

For example, as shown in FIG. 3 (c)-2, when the mobile phone detects the operation of tapping the control 304 by the user, the mobile phone can determine that the operation of sending the navigation request to the vehicle by the user is detected.

In an embodiment, if the mobile phone detects the operation of sending the navigation request to the vehicle by the user, the mobile phone may perform S1006; otherwise, the mobile phone may display a display interface of the second application.

S1006: The mobile phone sends the navigation request to the vehicle.

In an embodiment, for example, the second application is the map application 1. The navigation request may include identification information of the map application 1, starting point information, and destination information.

S1007: The vehicle determines whether the map application 1 and an in-vehicle map application are a same application.

For example, after parsing the package name in the navigation request, the vehicle can determine that the navigation request sent by the mobile phone is a navigation request from the map application 1. The vehicle may determine whether the package name of the map application 1 is consistent with a package name of the in-vehicle map application. If the package name of the map application 1 is consistent with the package name of the in-vehicle map application, S1008 is performed; otherwise, S1009 to S1011 are performed.

S1008: If the map application 1 and the in-vehicle map application are a same application, the vehicle may directly open the in-vehicle map application and start map navigation.

For example, as shown in FIG. 7(c), when the vehicle determines that the package name of the map application 1 indicated in the navigation request sent by the mobile phone is consistent with the package name of the in-vehicle map application, the vehicle may directly display a navigation route from a starting point to a destination based on the starting point information and the destination information in the navigation request.

S1009: If the map application 1 and the in-vehicle map application are not a same application, the vehicle may parse the starting point information and the destination information in the navigation request.

For example, as shown in FIG. 7(c), when the vehicle determines that the package name of the map application 1 indicated in the navigation request sent by the mobile phone is consistent with the package name of the in-vehicle map application, the vehicle may first obtain, through parsing, the starting point information (for example, the starting point longitude information and the starting point latitude information) and the destination information (for example, destination longitude information and destination latitude information) from the navigation request.

S1010: The vehicle reassembles the starting point information and the destination information into a navigation request supported by the in-vehicle map application.

For example, a uri-data attribute in the navigation request sent by the mobile phone is "yingyong1://map/slon1/slat1/dlon1/dlat2". In this case, the mobile phone can determine the starting point latitude information (slat1), the starting point longitude information (slon1), the destination latitude information (dlat1), and destination longitude information (dlon1). In this case, the mobile phone may reassemble the starting point longitude information, the starting point latitude information, the destination longitude information, and the destination latitude information into the navigation request supported by the in-vehicle map application. For example, a uri-data attribute in a navigation request reassembled by the vehicle is "yingyong2://map/slon1/slat1/dlon1/dlat2".

S1011: The vehicle executes a navigation task based on the reassembled navigation request.

For example, after reassembling the navigation request, the vehicle may start the in-vehicle map application based on the reassembled navigation request, and display, on the in-vehicle map application, information about a plurality of planned routes from the starting point to the destination. When the vehicle detects an operation of selecting a route from the plurality of planned routes by the user, the mobile phone may display a navigation-route display interface of the route.

For example, as shown in (b) in FIG. 7(b), when the vehicle detects the operation of tapping the "Accept" control by the user, if the vehicle determines that the package name of the map application 1 indicated in the navigation request sent by the mobile phone is inconsistent with the package name of the in-vehicle map application, the vehicle may display, after reassembling the navigation request, routes planned by the in-vehicle map application (the route planned by the in-vehicle map application may be different from the routes planned by the mobile phone shown in FIG. 7(a)-2), and prompt the user to select a route from the planned routes. When the vehicle detects an operation of selecting a route from the planned routes by the user, the vehicle may display, on a central display, the display interface of the navigation route shown in FIG. 7(c).

It should be understood that the vehicle may also execute a corresponding navigation task after receiving corresponding navigation information entered by the user (for example, detecting an operation of entering a destination and selecting a route by the user).

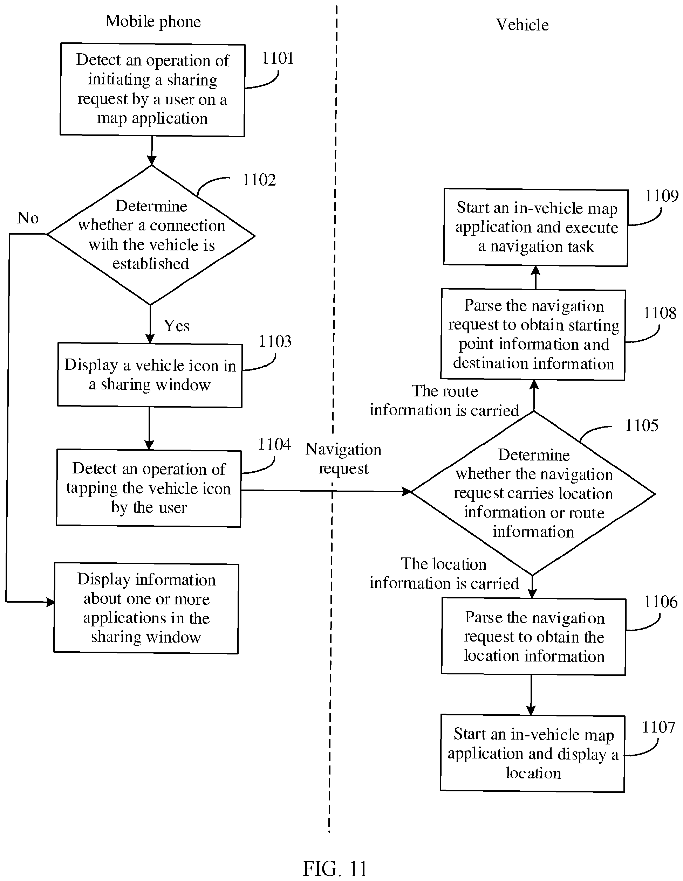

FIG. 11 is a schematic flowchart of a method 1100 for interaction between a mobile phone and a vehicle according to an embodiment of this application. As shown in FIG. 11, the method 1100 includes the following steps.

S1101: The mobile phone detects an operation of initiating a sharing request by a user on a map application.

In an embodiment, the sharing request may include a location sharing request or a route sharing request.

For example, as shown in FIG. 5(b), when the mobile phone detects the operation of tapping the "Share" control 502 by the user, the mobile phone can determine that an operation of initiating, by the user on the map application 1, a location sharing request related to the school A is detected.

For example, as shown in FIG. 6(a), when the mobile phone detects the operation of tapping the "Share" control 601 by the user, the mobile phone can determine that an operation of initiating, by the user on the map application 1, a route sharing request related to the starting point to the destination is detected.

S1102: The mobile phone determines whether a connection with the vehicle is established.

It should be understood that, for a process in which the mobile phone determines whether a connection with the vehicle is established, refer to the descriptions in the foregoing embodiments. Details are not described herein again.

In an embodiment, if the connection between the mobile phone and the vehicle is established, the mobile phone may perform S1103; otherwise, the mobile phone may display information about one or more applications in a sharing window.

S1103: If the connection between the mobile phone and the vehicle is established, the mobile phone may display an icon of the vehicle in the sharing window.

For example, if the connection between the mobile phone and the vehicle is established, after detecting tapping a "Share" control by the user, the mobile phone may display the vehicle icon 504 in the sharing window shown in FIG. 5(c).

For example, if the connection between the mobile phone and the vehicle is established, after detecting tapping the "Share" control by the user, the mobile phone may display the vehicle icon 602 in the sharing window shown in FIG. 6(b).

S1104: The mobile phone sends a navigation request to the vehicle in response to detecting the operation of tapping the vehicle icon by the user.

In an embodiment, if the sharing request in S1101 is a location sharing request, the navigation request may carry location information (for example, the navigation request may carry a destination longitude, a destination latitude, and a destination name).

In an embodiment, if the sharing request in S1101 is a route sharing request, the navigation request may carry route information. For example, the route information includes starting point information (for example, a starting point longitude, a starting point latitude, and a starting point name) and destination information (for example, a destination longitude, a destination latitude, and a destination name).

S1105: The vehicle determines whether the navigation request carries the location information or the route information.

In an embodiment, if the vehicle determines that the navigation request carries the location information, S1106 and S1107 may be performed; or if the vehicle determines that the navigation request carries the route information, S1108 and S1109 may be performed.

S1106: The vehicle parses the navigation request to obtain information about a location.

For example, if a uri-data attribute in the navigation request sent by the mobile phone is "yingyong1://map/slon1/slat1", the vehicle may determine, based on the attribute, that a latitude and a longitude of the location carried in the navigation request are slat1 and slon1 respectively. The vehicle may further determine a package name of a map application 1 on the mobile phone based on the package attribute in the navigation request sent by the mobile phone, to determine whether the package name of the map application 1 is consistent with a package name of an in-vehicle map application. If the package name of the map application 1 is consistent with the package name of the in-vehicle map application, the vehicle may perform S1107. Otherwise, the vehicle may perform S1107 after reassembling, based on the longitude information and the latitude information of the location, the longitude information and the latitude information of the location into the navigation request supported by the in-vehicle map application.

S1107: The vehicle starts the in-vehicle map application and displays the location.

S1108: The vehicle parses the navigation request to obtain the starting point information and the destination information.

For example, a uri-data attribute in the navigation request sent by the mobile phone is "yingyong1://map/slon1/slat1/dlon1/dlat2". In this case, the mobile phone can determine starting point latitude information (slat1), starting point longitude information (slon1), destination latitude information (dlat1), and destination longitude information (dlon1). The vehicle may further determine the package name of the map application 1 on the mobile phone based on the package attribute in the navigation request sent by the mobile phone, to determine whether the package name of the map application 1 is consistent with the package name of the in-vehicle map application. If the package name of the map application 1 is consistent with the package name of the in-vehicle map application, the vehicle may perform S1109. Otherwise, the mobile phone may reassemble the determined starting point longitude information, starting point latitude information, destination longitude information, and destination latitude information into the navigation request supported by the in-vehicle map application. For example, a uri-data attribute in a navigation request reassembled by the vehicle is "yingyong2://map/slon1/slat1/dlon1/dlat2".

S1109: The vehicle starts the in-vehicle map application and executes a navigation task.

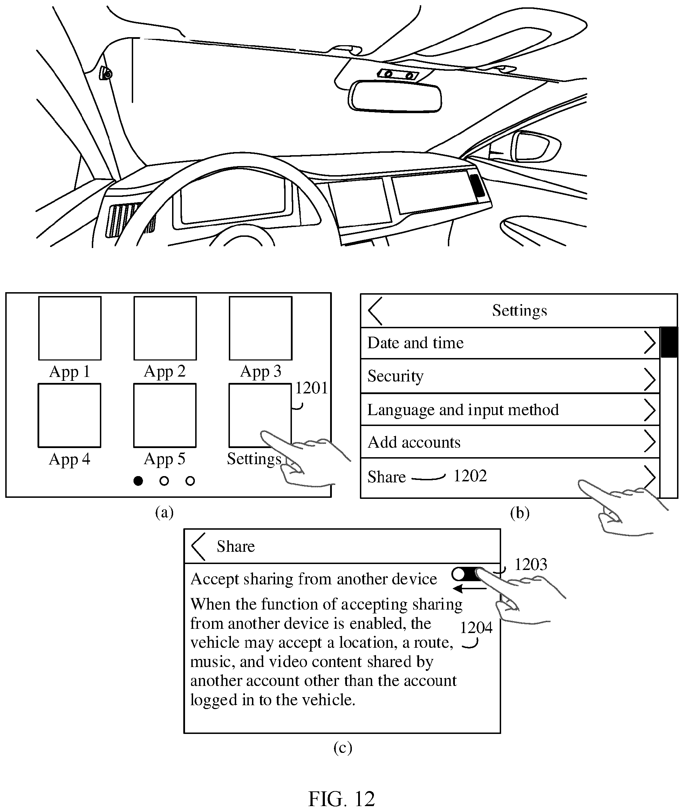

For example, after obtaining the starting point information and the destination information, the vehicle may determine a plurality of planned routes from the starting point to the destination based on the starting point information and the destination information. When detecting selection of a specific planned route from the plurality of planned routes by the user, the vehicle may display a display interface of a navigation route based on the planned route selected by the user. With reference to FIG. 10 and FIG. 11, the foregoing describes the process of interaction between the mobile phone and the vehicle in embodiments of this application. With reference to FIG. 12, the following describes another set of GUIs provided in an embodiment of this application. FIG. 12 describes a process in which a user sets, by using a setting function on a vehicle, whether to accept information shared by another account.

A GUI shown in (a) in FIG. 12 is a home screen displayed on a central display of the vehicle, and the home screen includes icons of a plurality of applications and a "Settings" icon 1201. When the vehicle detects an operation of tapping the icon 1201 by the user, the vehicle may display a GUI shown in (b) in FIG. 12.

The GUI shown in (b) in FIG. 12 is a function setting interface. The function setting interface includes setting options of "Date and time", "Security", "Language and input method", "Add accounts", and "Share", and a back control. When the vehicle detects an operation of tapping a setting option 1202 of "Share" by the user, the vehicle may display a GUI shown in (c) in FIG. 12.

The GUI shown in (c) in FIG. 12 is a sharing function setting interface. The sharing function setting interface includes a control 1203 for enabling or disabling a function of accepting sharing from another device and prompt information 1204 "When the function of accepting sharing from another device is enabled, the vehicle may accept a location, a route, music, and video content shared by another account other than the account logged in to the vehicle." When the vehicle detects that the user enables the function of accepting sharing from another device, the vehicle may accept a location, a route, music, and video content shared by another account.

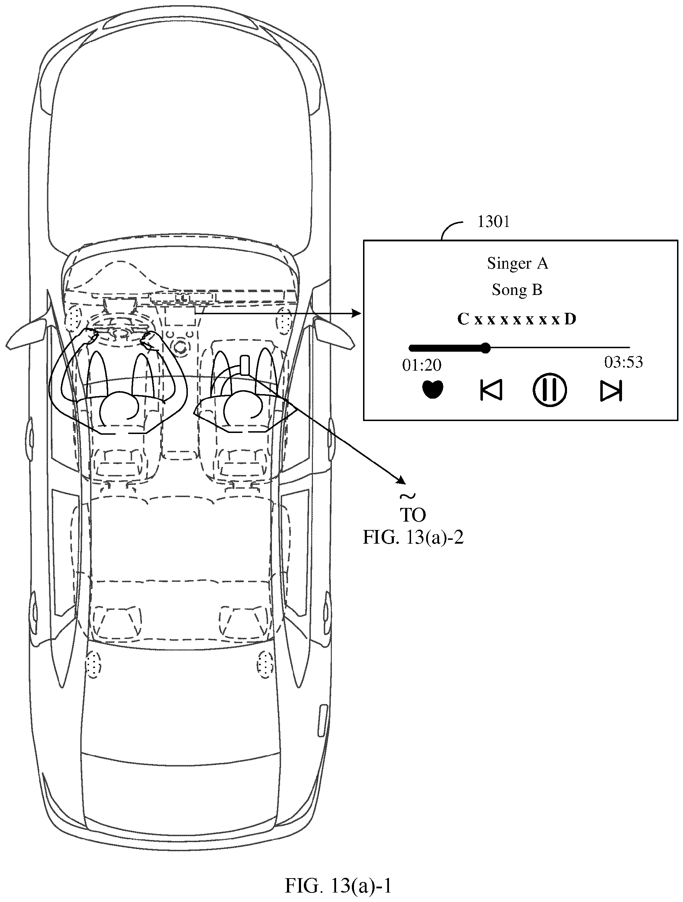

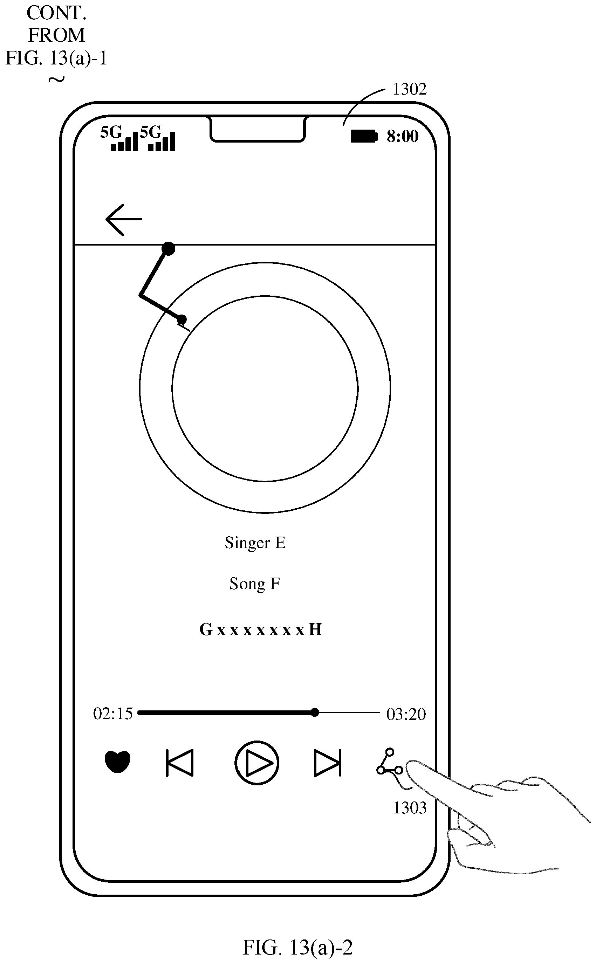

FIG. 13(a)-1 to FIG. 13(c) show another set of GUIs according to an embodiment of this application. FIG. 13(a)-1 to FIG. 13(c) describe a process of sharing an audio with a vehicle by using a mobile phone.

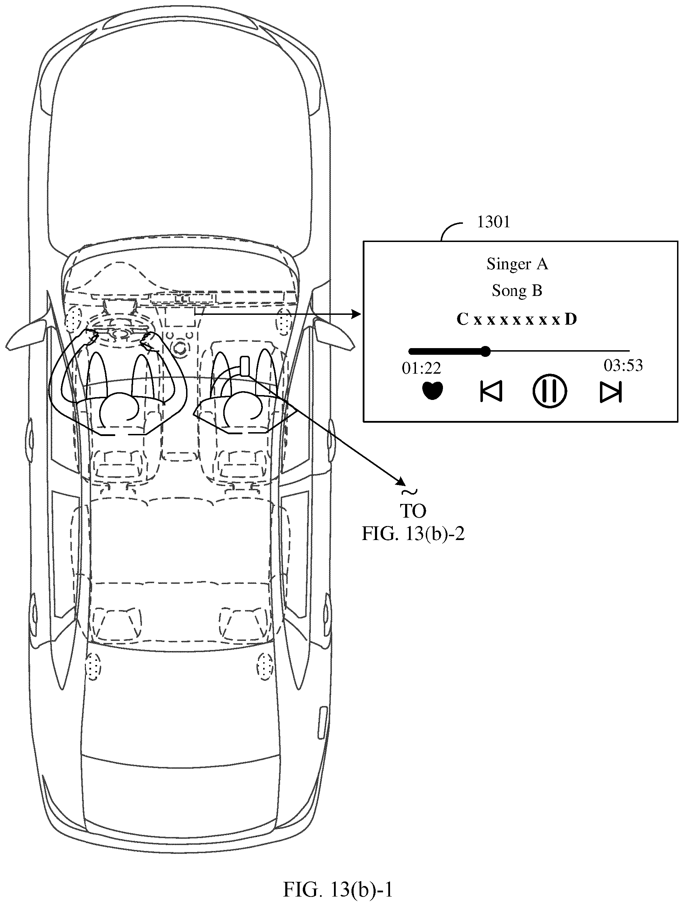

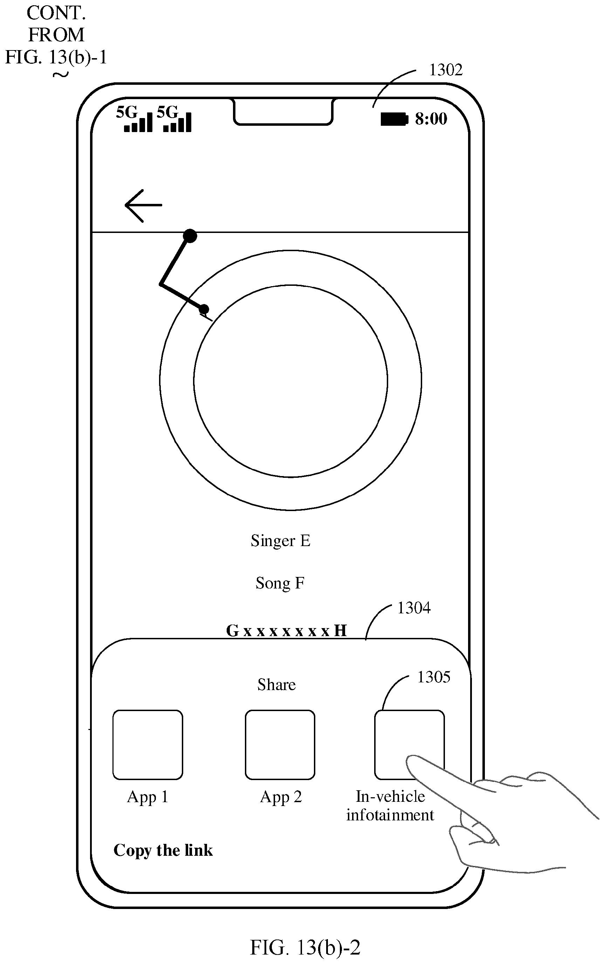

As shown in FIG. 13(a)-1, when the father (in the driver's seat) drives with the daughter (in the front passenger seat), a music playing interface 1301 is displayed on a central display of the vehicle. The playing interface 1301 includes information about a singer A, information about a song name (for example, Song B), information about lyrics (for example, CxxxxxxxD), a progress bar of a song (for example, duration of the song is 3 minutes 53 seconds, and a current progress of song playing is 1 minute 20 seconds), a like, a control for playing a previous song, a control for pause, and a control for playing a next song. In this case, a music playing interface 1302 is displayed on a mobile phone of the daughter in the front passenger seat. The playing interface 1302 includes information about a singer E, information about a song name (for example, Song F), information about lyrics (for example, GxxxxxxxH), a progress bar of a song (for example, duration of the song is 3 minutes 20 seconds, and a current progress of song playing is 2 minutes 15 seconds), a like, a control for playing a previous song, a control for pause, a control for playing a next song, and a control for sharing. When the mobile phone of the daughter detects an operation of tapping, by the user, a control 1303 for sharing, the mobile phone may display a GUI shown in FIG. 13 (b)-2.

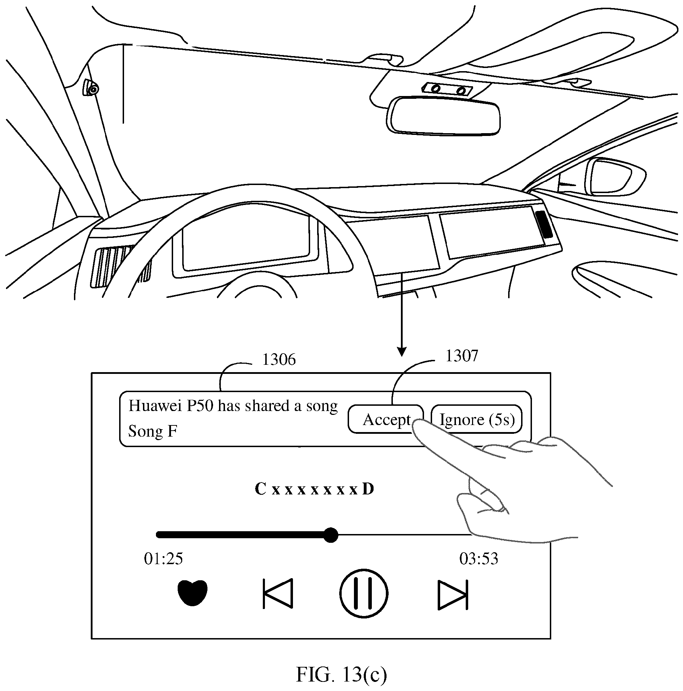

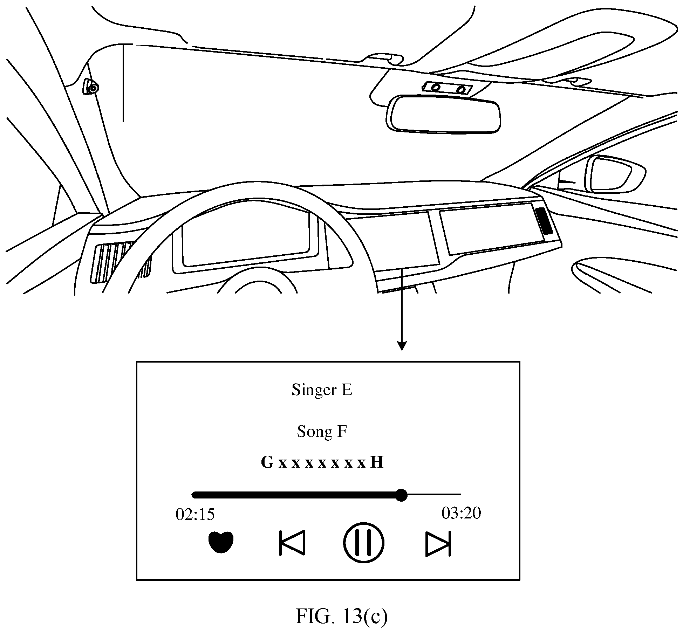

As shown in FIG. 13(b)-2, in response to detecting the operation of tapping, by the user, the control 1303 for sharing, the mobile phone may display a sharing window 1304. The sharing window 1304 includes an "App 1" icon, an "App 2" icon, an "In-vehicle infotainment" icon 1305, and a "Copy the link" control. When the mobile phone detects an operation of tapping the icon 1305 by the user, the mobile phone may send, to the vehicle, device information of the mobile phone (for example, a device model is Huawei P50) and information about Song F. In response to receiving the information sent by the mobile phone, the vehicle may display, on the central display, a GUI shown in FIG. 13(c).

As shown in FIG. 13(c), in response to receiving the information sent by the mobile phone, the vehicle may display a prompt box 1306 on the central display. The prompt box 1306 includes prompt information "Huawei P50 has shared a song Song F", an "Accept" control 1307, and an "Ignore" control. When the vehicle detects an operation of tapping the control 1307 by the user, the vehicle may display a GUI shown in FIG. 13(d).

As shown in FIG. 13(d), in response to detecting the operation of tapping the control 1307 by the user, the vehicle may switch a display interface of an in-vehicle music application from a playing interface of Song B to a playing interface of Song F.

In an embodiment, the information sent by the mobile phone to the vehicle may further include information about a progress bar on the mobile phone (for example, a current progress of playing Song B is 2 minutes 15 seconds). When the vehicle detects an operation of tapping the control 1307 by the user, the vehicle may start playing Song F from 2 minutes 15 seconds.

In an embodiment, when detecting that the user is in the vehicle, the mobile phone may directly indicate the user on the music playing interface "It is detected that you are in the vehicle. Do you want to send the song to the vehicle?" When the mobile phone detects an operation of determining, by the user, to send the information about the song to the vehicle, the mobile phone may send the information about the song to the vehicle.

In this embodiment of this application, when the mobile phone detects that the user shares a song with the vehicle through a music application, the mobile phone may send information about the song to the vehicle. Then the vehicle may ask the user whether to accept the information about the song. In this way, the user does not need to manually enter the song information in the in-vehicle music application. Therefore, a complex input process performed when the user uses an electronic control unit to listen to the music is omitted. This helps improve user experience.

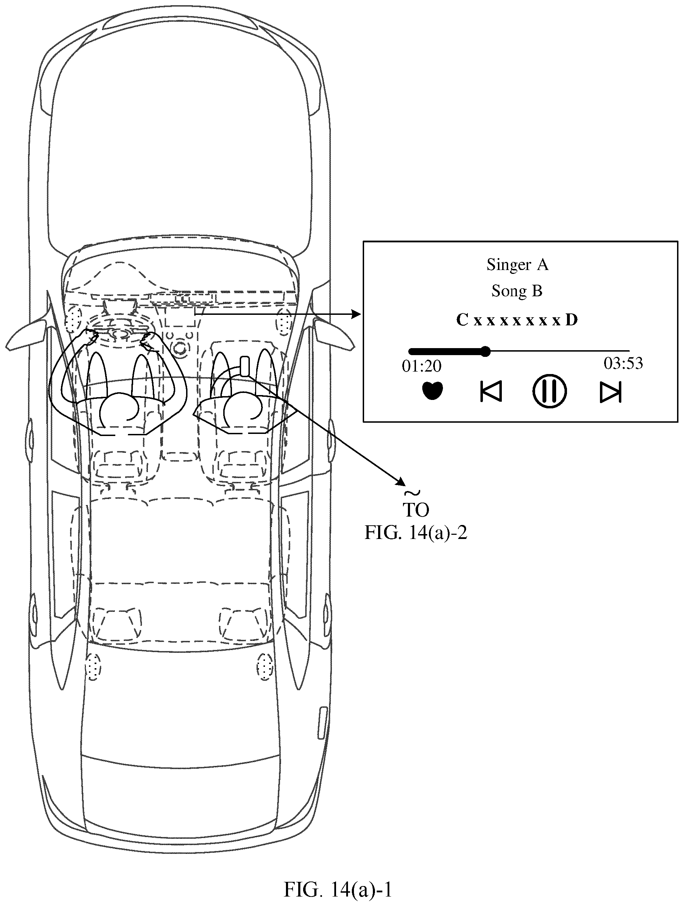

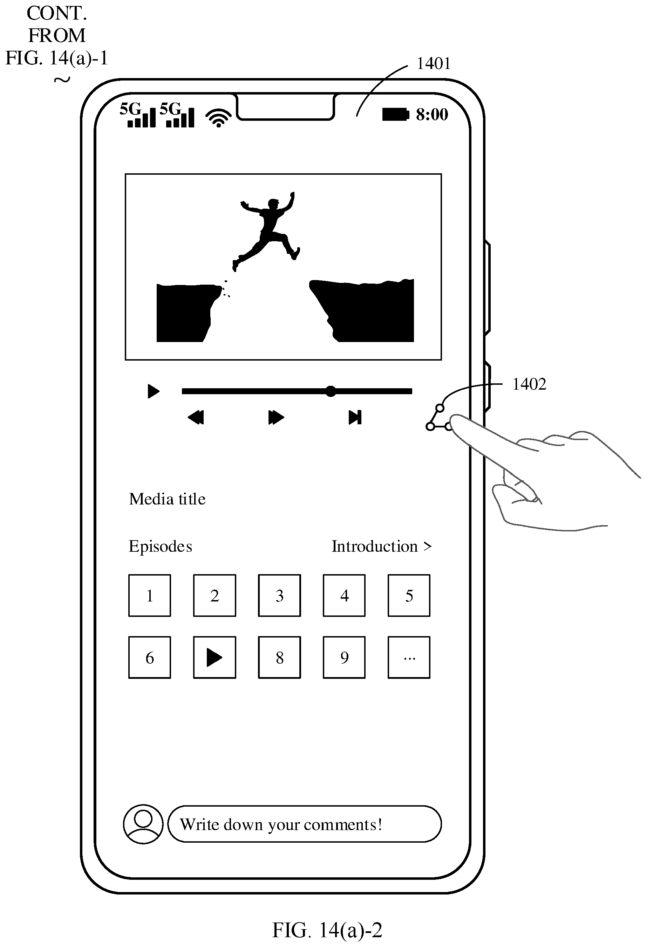

FIG. 14(a)-1 to FIG. 14(d) show another set of GUIs according to an embodiment of this application. FIG. 14(a)-1 to FIG. 14(d) describe a process of sharing a video with a vehicle by using a mobile phone.

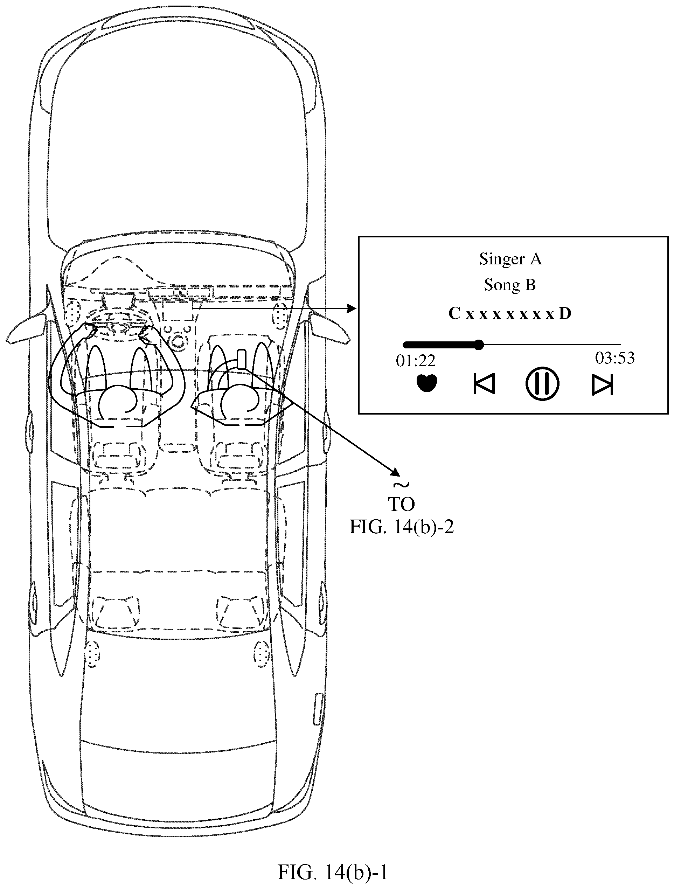

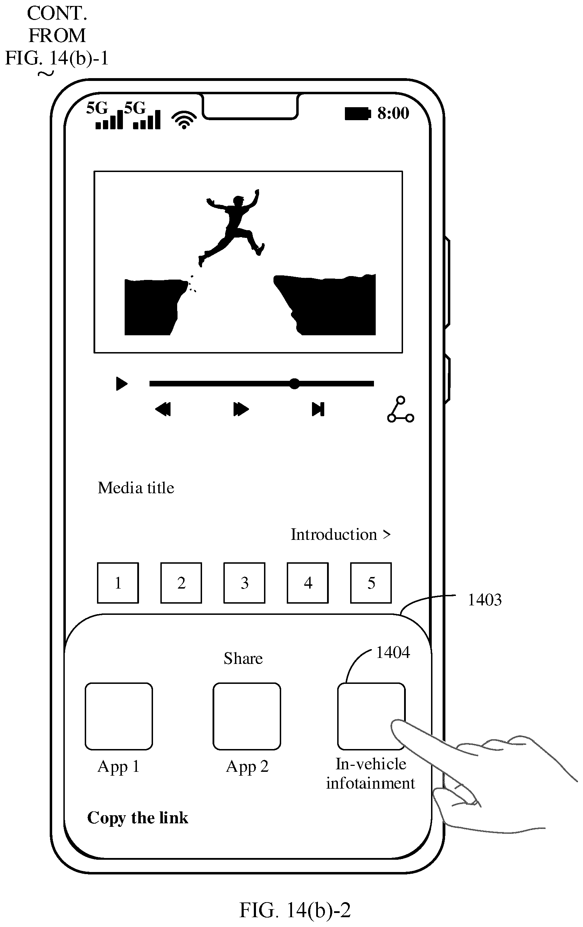

As shown in FIG. 14(a)-2, the GUI is a playing interface 1401 of a video A displayed on the mobile phone of the daughter. The playing interface 1401 includes a progress bar of the video, a control for playing a previous video, a control for pause, a control for playing a next video, and a control 1402 for sharing. When the mobile phone detects an operation of tapping, by the user, the control 1402 for sharing, the mobile phone may display a GUI shown in FIG. 14(b)-2.

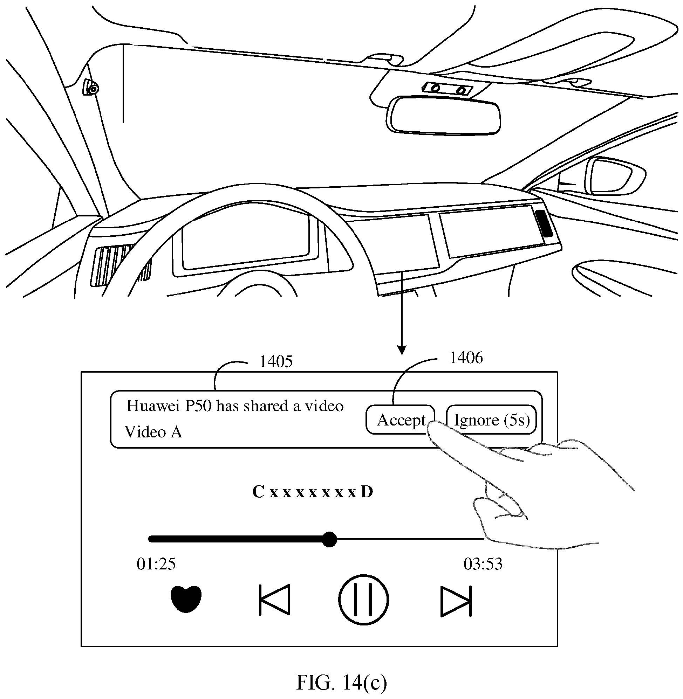

As shown in FIG. 14(b)-2, in response to detecting the operation of tapping, by the user, the control 1402 for sharing, the mobile phone may display a sharing window 1403. The sharing window 1403 includes an "App 1" icon, an "App 2" icon, an "In-vehicle infotainment" icon 1404, and a "Copy the link" control. When the mobile phone detects an operation of tapping the icon 1404 by the user, the mobile phone may send, to the vehicle, device information of the mobile phone (for example, a device model is Huawei P50) and information about the video (for example, a video name). In response to receiving the information sent by the mobile phone, the vehicle may display, on the central display, a GUI shown in FIG. 14(c).

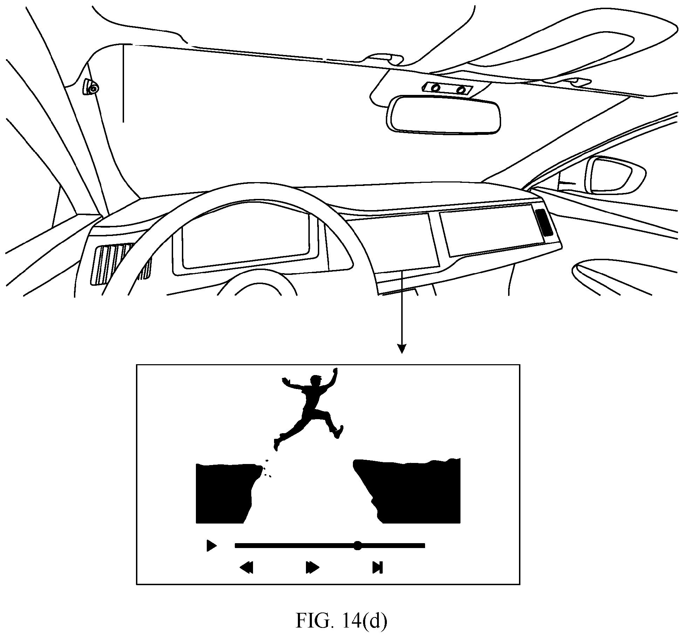

As shown in FIG. 14(c), in response to receiving the information sent by the mobile phone, the vehicle may display a prompt box 1405 on the central display. The prompt box 1405 includes prompt information "Huawei P50 has shared a video Video A", an "Accept" control 1406, and an "Ignore" control. When the vehicle detects an operation of tapping the control 1406 by the user, the vehicle may display a GUI shown in FIG. 14(d).

As shown in FIG. 14(d), in response to detecting an operation of tapping the control 1406 by the user, the vehicle may jump from a display interface of an in-vehicle music application to a display interface of an in-vehicle video application. The vehicle may display a playing interface of Video A on the in-vehicle video application.

In an embodiment, when detecting that the user is in the vehicle, the mobile phone may directly indicate the user on a video playing interface "It is detected that you are in the vehicle. Do you want to send information about the video to the vehicle?" When the mobile phone detects an operation of determining, by the user, to send the information about the video to the vehicle, the mobile phone may send the information about the video to the vehicle.

In this embodiment of this application, when the mobile phone detects that the user shares a video with the vehicle through a video application, the mobile phone may send information about the video to the vehicle. Then the vehicle may ask the user whether to accept the information about the video. In this way, the user does not need to manually enter the video information in the in-vehicle video application. Therefore, a complex input process performed when the user uses an electronic control unit to watch a video is omitted. This helps improve user experience.

The location sharing function and the media sharing function in embodiments of this application may be considered as sharing events. A sequence is not limited. The location information may be shared before the media information. Alternatively, the media information may be shared before the location information. Optionally, for a plurality of sharing requests from another user or sharing requests of a plurality of types from another user, an in-vehicle infotainment may query the driver for each sharing request, or the in-vehicle infotainment may query the driver only once, and a subsequent sharing request is accepted by default. Further, after the in-vehicle infotainment automatically accepts the subsequent sharing request, an interface displays "Do you want to cancel the sharing?" Then the driver may cancel sharing from another user in time. After receiving an instruction for confirming cancellation by the user, the in-vehicle infotainment resumes previous navigation or media display.

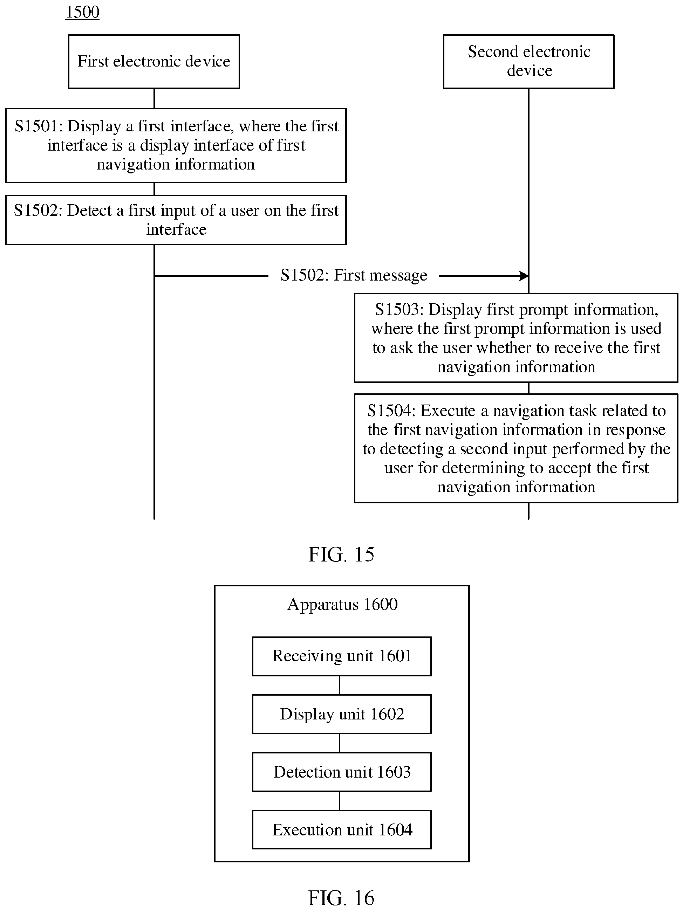

FIG. 15 is a schematic flowchart of a navigation information sharing method 1500 according to an embodiment of this application. The method can be performed by a first electronic device and a second electronic device. For example, the first electronic device may be the foregoing mobile phone, and the second electronic device may be the foregoing vehicle. The method 1500 includes the following steps.

S1501: The first electronic device is configured to display a first interface, where the first interface is a display interface of first navigation information.

Optionally, the first navigation information includes but is not limited to information such as an address and a route.

Optionally, information about the address includes information such as a longitude, a latitude, and a name of the address.

For example, the first electronic device may be a mobile phone. As shown in FIG. 2(d)-2, the mobile phone may display location information of the school A on the social application.

For example, as shown in FIG. 3(a), the mobile phone may display the location information of the school A on the map application.

For example, as shown in FIG. 6(a), the mobile phone may display the information about the route (for example, the recommended route and the route 2) from the current location to the school A on the map application.

In this embodiment of this application, an application corresponding to the first interface is not limited. For example, the first interface may be a display interface of a social application. For example, a message on a chat interface of a user on the social application includes address information. For another example, the first interface may be a display interface of an SMS message application. For example, an SMS message on the SMS message application includes address information. For another example, the first interface may be a display interface of a life application. Location information of a supermarket or a hotel may be displayed on the display interface of the life application. For another example, the first interface may be a display interface of a map application, and information about a location or a route may be displayed on the display interface of the map type application.

S1502: The first electronic device is further configured to send a first message in response to detecting a first input performed by the user on the first interface, where the first message includes the first navigation information.

Optionally, that the first electronic device sends a first message includes: The first electronic device displays second prompt information on the first interface in response to detecting establishment of a connection between the first electronic device and the second electronic device, where the second prompt information is used to ask the user whether to send the first navigation information to the second electronic device; and when receiving a fifth input performed by the user for determining to send the first navigation information to the second electronic device, the first electronic device sends the first message to the second electronic device.

For example, as shown in FIG. 2(d)-2, when the mobile phone determines that the connection between the mobile phone and the vehicle is established, the mobile phone may display the prompt box 204, where the prompt box 204 includes the second prompt information (for example, text content "It is detected that you are in the vehicle. Do you want to send the location to the vehicle?"). When the mobile phone detects an operation of tapping the "Yes" control 205 by the user, the mobile phone may send the first message to the vehicle.

Optionally, the first interface includes a sharing control, and that the first electronic device sends a first message includes: The first electronic device displays a sharing window in response to detecting a sixth input performed by the user for the sharing control, where the sharing window includes identification information of the second electronic device; and the first electronic device sends the first message to the second electronic device in response to detecting a seventh input performed by the user for the identification information of the second electronic device.

Optionally, the identification information of the second electronic device may be icon information of the second electronic device.

For example, as shown in FIG. 6(a), the interface displayed on the mobile phone includes the "Share" control 601. When the mobile phone detects the operation of tapping the "Share" control 601 by the user, the mobile phone may display the sharing window, where the sharing window includes the icon 602 of the vehicle. When the mobile phone detects an operation of tapping the icon 602 by the user, the mobile phone may send the first message to the vehicle.

Optionally, the first message may further carry information (for example, a nickname corresponding to the account) about an account logged in to the first electronic device.

For example, when receiving the first message, the second electronic device may notify the user that the account logged in to the first electronic device has shared the first navigation information.

Optionally, the first message may further carry device information of the first electronic device.

For example, as shown in FIG. 2(e)-1, the vehicle may display the prompt box 207, and the prompt box 207 includes the prompt information "Huawei P50 has shared a location School A".

S1503: The second electronic device is configured to display first prompt information in response to receiving the first message, where the first prompt information is used to ask the user whether to accept the first navigation information.

Optionally, a first account is logged in to the second electronic device, and the second electronic device is further configured to: before displaying the first prompt information, detect a third input performed by the user for enabling a first function. In a case in which the first function is enabled, the second electronic device can notify the user when receiving information shared by an electronic device to which another account other than the first account is logged in.

For example, as shown in FIG. 7(d), the information sent by the mobile phone to the vehicle may further include account information of the mobile phone, and the prompt box further includes a check box indicating whether to only accept a location and a route shared by an electronic device to which an account same as that of the vehicle is logged in. For example, the account logged in to the vehicle is an account 1 (for example, a Huawei account of the father). When the check box is selected, the vehicle may respond only to location and route information shared by another electronic device to which the account 1 is logged in, and does not respond to location and route information shared by an electronic device to which another account is logged in. For example, when the check box is not selected, the vehicle may respond to the location and route information shared by the electronic device to which the account 1 is logged in and an electronic device to which an account other than the account 1 is logged in.

For example, as shown in (c) in FIG. 12, when the vehicle detects that the user enables a function of accepting sharing from another device, the vehicle may accept a location, a route, music, and video content shared by another account, or the vehicle notifies the user when receiving information shared by an electronic device to which another account other than the account logged in to the vehicle is logged in.

Optionally, in a case in which the first function is disabled, when receiving information shared by an electronic device to which another account other than the first account is logged in, the second electronic device ignores the shared information, or does not notify the user.

S1504: The second electronic device is further configured to execute a navigation task related to the first navigation information in response to detecting a second input performed by the user for determining to accept the first navigation information.

Optionally, the second electronic device displays a second interface before receiving the first message, where the second interface is a display interface of second navigation information; and the second electronic device switches, in response to detecting the second input, from display of the second interface to display of a third interface, where the third interface is a display interface of the navigation task.

Optionally, the second interface is a display interface of a navigation route from a current location of the second electronic device to a first address.

Optionally, the first message carries information about the account logged in to the first electronic device, and the second electronic device is specifically configured to: the second electronic device displays the first prompt information when receiving the first message and determining that the account logged in to the first electronic device is not associated with an account logged in to the second electronic device.

Optionally, whether the second electronic device displays the first prompt information may also be determined with reference to the following conditions.

Condition (1) is whether the second electronic device is executing a navigation task when receiving the first message.

Condition (2) is whether the account logged in to the first electronic device is not associated with the account logged in to the second electronic device.

For example, the second electronic device may display the first prompt information if the second electronic device determines that both the condition (1) and the condition (2) are met, that is, the second electronic device is executing a navigation task when receiving the first navigation information sent by the first electronic device, and the second electronic device determines that the account logged in to the first electronic device is not associated with the account logged in to the second electronic device.

Optionally, the condition (1) and the condition (2) may correspond to different priorities. When a condition with a higher priority is met, the second electronic device may display the first prompt information.

Optionally, if the priority of the condition (1) is higher than that of the condition (2), when the second electronic device is executing a navigation task when receiving the first navigation information sent by the first electronic device, and the account logged in to the first electronic device is associated with the account logged in to the second electronic device, the second electronic device may also display the first prompt information.

Optionally, if the priority of the condition (2) is higher than that of the condition (1), when the second electronic device is not executing a navigation task when receiving the first navigation information sent by the first electronic device, and the account logged in to the first electronic device is not associated with the account logged in to the second electronic device, the second electronic device may also display the first prompt information.

Optionally, the second electronic device stores first human physiological parameter information, and the second electronic device is further configured to: before executing the navigation task, determine that human physiological parameter information of the user who performs the second input matches the first human physiological parameter information.

Optionally, if the first navigation information includes information about an address, that the second electronic device executes the navigation task includes: The second electronic device displays the address; or the second electronic device displays a selection interface of a navigation route from the current location of the second electronic device to the address, where the selection interface of the navigation route may include one or more routes from the current location of the second electronic device to the address; or the second electronic device displays a display interface of a navigation route from the current location of the second electronic device to the address.

Optionally, if the first navigation information includes information about a route from a starting point to a destination, that the second electronic device executes the navigation task includes: The second electronic device displays a display interface of a navigation route from the current location of the second electronic device to the destination; or that the second electronic device executes the navigation task includes: The second electronic device displays a display interface of a navigation route from the starting point to the destination.

In this embodiment of this application, after detecting the first input performed by the user, the first electronic device may send the first navigation information to the second electronic device. When detecting the input performed by the user for determining to accept the first navigation information, the second electronic device may execute the corresponding navigation task. In this way, when executing a navigation task across electronic devices, the user does not need to perform complex operations such as manually entering an address and searching for a navigation route on the second electronic device. The user only needs to determine, on the second electronic device, to accept the first navigation information, so that the second electronic device can execute the navigation task. In this way, the operation process of the user during navigation is simplified, and user experience is improved.

Optionally, the system further includes a third electronic device. A second account is logged in to the third electronic device. The second account is associated with an account logged in to the second electronic device. The third electronic device is configured to display a fourth interface. The fourth interface is a display interface of third navigation information. The third electronic device is further configured to send a second message in response to detecting a fourth input performed by the user on the fourth interface, where the second message includes the third navigation information. The second electronic device is configured to execute, in response to receiving the second message, a navigation task related to the third navigation information.

In this embodiment of this application, if the account logged in to the second electronic device is associated with the account logged in to the third electronic device, after receiving the second message sent by the third electronic device, the second electronic device may directly perform the navigation task related to the third navigation information without displaying prompt information. The process of confirming accepting the third navigation information by the user is omitted, and user experience is improved while security is ensured.

FIG. 16 is a schematic block diagram of an apparatus 1600 according to an embodiment of this application. The apparatus 1600 may be disposed in the second electronic device in FIG. 15. The apparatus 1600 includes: a receiving unit 1601, configured to receive a first message sent by another electronic device, where the first message includes first navigation information; a display unit 1602, configured to display first prompt information, where the first prompt information is used to ask a user whether to accept the first navigation information; a detection unit 1603, configured to detect an input performed by the user for determining to accept the first navigation information; and an execution unit 1604, configured to execute a navigation task related to the first navigation information.

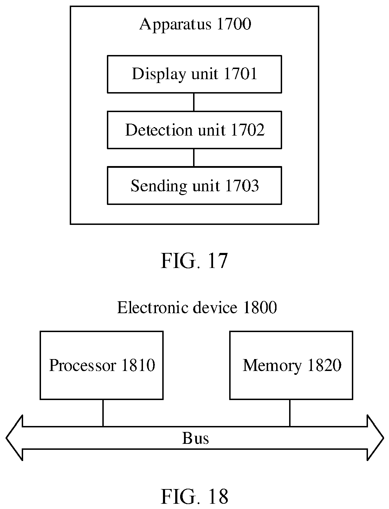

FIG. 17 is a schematic block diagram of an apparatus 1700 according to an embodiment of this application. The apparatus 1700 may be disposed on the first electronic device in FIG. 15. The apparatus 1700 includes: a display unit 1701, configured to: display a first interface, where the first interface is a display interface of first navigation information; and when a connection is established between the electronic device and another electronic device, display prompt information on the first interface, where the prompt information is used to ask a user whether to send the first navigation information to the another electronic device; a detection unit 1702, configured to detect an input performed by the user for determining to send the first navigation information to the another electronic device; and a sending unit 1703, configured to send a first message to the another electronic device, where the first message includes the first navigation information.

FIG. 18 is a schematic diagram of a structure of an electronic device 1800 according to an embodiment of this application. As shown in FIG. 18, the electronic device includes one or more processors 1810 and one or more memories 1820. The one or more memories 1820 store one or more computer programs, and the one or more computer programs include instructions. When the instructions are executed by the one or more processors 1310, the first electronic device or the second electronic device performs the technical solutions in the foregoing embodiments.

An embodiment of this application provides a system, including a first electronic device and a second electronic device. The system is configured to perform the technical solutions in the foregoing embodiments. Implementation principles and technical effects thereof are similar to those of the foregoing method embodiments. Details are not described herein again.

An embodiment of this application provides a computer program product. When the computer program product runs on the first electronic device, the first electronic device is enabled to perform the technical solutions in the foregoing embodiments. Implementation principles and technical effects thereof are similar to those of the foregoing method embodiments. Details are not described herein again.

An embodiment of this application provides a computer program product. When the computer program product runs on the second electronic device, the second electronic device is enabled to perform the technical solutions in the foregoing embodiments. Implementation principles and technical effects thereof are similar to those of the foregoing method embodiments. Details are not described herein again.

An embodiment of this application provides a readable storage medium. The readable storage medium includes instructions. When the instructions are run on a first electronic device, the first electronic device is enabled to perform the technical solutions in the foregoing embodiments. Implementation principles and technical effects thereof are similar. Details are not described herein again.

An embodiment of this application provides a readable storage medium. The readable storage medium includes instructions. When the instructions are run on a second electronic device, the second electronic device is enabled to perform the technical solutions in the foregoing embodiments. Implementation principles and technical effects thereof are similar. Details are not described herein again.

An embodiment of this application provides a chip. The chip is configured to execute instructions. When the chip runs, the technical solutions in the foregoing embodiments are performed. Implementation principles and technical effects thereof are similar. Details are not described herein again.

A person of ordinary skill in the art may be aware that the units and algorithm steps described with reference to examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, reference should be made to the corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. The parts displayed as units may or may not be physical units, in other words, may be located in one location, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of embodiment of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in this application shall fall within the protection scope of this application. Therefore, the protection scope of embodiments of this application shall be subject to the protection scope of the claims.

## Claims

1. A system, wherein the system comprises a first electronic device and a second electronic device, wherein
the first electronic device is configured to display a first interface, wherein the first interface is a display interface of first navigation information;
the first electronic device is further configured to send a first message in response to detecting a first input performed by a user on the first interface, wherein the first message comprises the first navigation information;
the second electronic device is configured to display first prompt information in response to receiving the first message, wherein the first prompt information is used to ask the user whether to accept the first navigation information; and
the second electronic device is further configured to execute a navigation task related to the first navigation information in response to detecting a second input performed by the user for determining to accept the first navigation information.

2. The system according to claim 1, wherein
the second electronic device is further configured to display a second interface before receiving the first message, wherein the second interface is a display interface of second navigation information; and
the second electronic device is specifically configured to switch from display of the second interface to display of a third interface in response to detecting the second input, wherein the third interface is a display interface of the navigation task.

3. The system according to claim 2, wherein the second interface is a display interface of a navigation route from a current location of the second electronic device to a first address.

4. The system according to any one of claims 1 to 3, wherein the first navigation information comprises information about a second address, and
the second electronic device is specifically configured to display information about a route from the current location of the second electronic device to the second address in response to detecting the second input.

5. The system according to any one of claims 1 to 4, wherein a first account is logged in to the second electronic device, and
the second electronic device is further configured to: before displaying the first prompt information, detect a third input performed by the user for enabling a first function, wherein in a case in which the first function is enabled, the second electronic device can notify the user when receiving information shared by an electronic device to which another account other than the first account is logged in.

6. The system according to any one of claims 1 to 5, wherein the second electronic device stores first human physiological parameter information; and
the second electronic device is further configured to: before executing the navigation task, determine that human physiological parameter information of the user who performs the second input matches the first human physiological parameter information.

7. The system according to any one of claims 1 to 6, wherein the system further comprises a third electronic device, a second account is logged in to the third electronic device, and the second account is associated with an account logged in to the second electronic device, wherein
the third electronic device is configured to display a fourth interface, wherein the fourth interface is a display interface of third navigation information;
the third electronic device is further configured to send a second message in response to detecting a fourth input performed by the user on the fourth interface, wherein the second message comprises the third navigation information; and
the second electronic device is configured to execute a navigation task related to the third navigation information in response to receiving the second message.

8. The system according to any one of claims 1 to 7, wherein
the first electronic device is further configured to display second prompt information on the first interface in response to detecting establishment of a connection between the first electronic device and the second electronic device, wherein the second prompt information is used to ask the user whether to send the first navigation information to the second electronic device; and
the first electronic device is specifically configured to send the first message to the second electronic device in response to receiving a fifth input performed by the user for determining to send the first navigation information to the second electronic device.

9. The system according to any one of claims 1 to 7, wherein the first interface comprises a sharing control; and
the first electronic device is specifically configured to: display a sharing window in response to detecting a sixth input performed by the user for the sharing control, wherein the sharing window comprises identification information of the second electronic device; and
send the first message to the second electronic device in response to detecting a seventh input performed by the user for the identification information of the second electronic device.

10. The system according to any one of claims 1 to 9, wherein a second map application is installed on the second electronic device, and
the second electronic device is specifically configured to display the navigation task on the second map application in response to detecting the second input.

11. The system according to claim 10, wherein the first interface is a display interface of a first map application, a data format of the first navigation information is a first data format, and the first data format belongs to a data format of the first map application; and
the second electronic device is specifically configured to: before displaying the navigation task on the second map application, convert the data format of the first navigation information into a second data format, wherein the second data format belongs to a data format of the second map application; and
display the navigation task based on the first navigation information obtained through data format conversion.

12. The system according to any one of claims 1 to 11, wherein the second electronic device is a vehicle.

13. A navigation information sharing method, wherein the method is applied to an electronic device, and the method comprises:
receiving, by the electronic device, a first message sent by another electronic device, wherein the first message comprises first navigation information;
displaying, by the electronic device, first prompt information in response to receiving the first message, wherein the first prompt information is used to ask a user whether to accept the first navigation information; and
executing, by the electronic device, a navigation task related to the first navigation information in response to detecting an input performed by the user for determining to accept the first navigation information.

14. The method according to claim 13, wherein before the receiving, by the electronic device, a first message, the method further comprises:
displaying a second interface, wherein the second interface is a display interface of second navigation information; and
the executing, by the electronic device, a navigation task related to the first navigation information in response to detecting an input performed by the user for determining to accept the first navigation information comprises:
switching, by the electronic device, from display of the second interface to display of a third interface in response to detecting the input, wherein the third interface is a display interface of the navigation task.

15. The method according to claim 14, wherein the second interface is a display interface of a navigation route from a current location of the electronic device to a first address.

16. The method according to any one of claims 13 to 15, wherein the first navigation information comprises information about a second address, and
the executing, by the electronic device, a navigation task related to the first navigation information in response to detecting an input performed by the user for determining to accept the first navigation information comprises:
displaying, by the electronic device, information about the route from the current location of the electronic device to the second address in response to detecting the input.

17. The method according to any one of claims 13 to 16, wherein a first account is logged in to the electronic device, and the method further comprises:
before displaying the first prompt information, detecting, by the electronic device, an operation of the user for enabling a first function, wherein in a case in which the first function is enabled, the electronic device can notify the user when receiving information shared by an electronic device to which another account other than the first account is logged in.

18. The method according to any one of claims 13 to 17, wherein the electronic device stores first human physiological parameter information; and the method further comprises:
before executing the navigation task, determining, by the electronic device, that human physiological parameter information of the user who performs the input matches the first human physiological parameter information.

19. The method according to any one of claims 13 to 18, wherein the method further comprises:
receiving, by the electronic device, a second message sent by another electronic device, wherein the second message comprises third navigation information, and an account logged in to the another electronic device is associated with an account logged in to the electronic device; and
executing, by the electronic device, a navigation task related to the third navigation information in response to receiving the second message.

20. The method according to any one of claims 13 to 19, wherein a second map application is installed on the electronic device, and
the executing, by the electronic device, a navigation task related to the first navigation information in response to detecting an input performed by the user for determining to accept the first navigation information comprises:
displaying, by the electronic device, the navigation task on the second map application in response to detecting the input.

21. The method according to claim 20, wherein a first map application is installed on the another electronic device, a data format of the first navigation information is a first data format, and the first data format belongs to a data format of the first map application; and
the displaying, by the electronic device, the navigation task on the second map application comprises:
converting the data format of the first navigation information into a second data format, wherein the second data format belongs to a data format of the second map application; and
displaying the navigation task based on the first navigation information obtained through data format conversion.

22. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the following steps:
receiving a first message sent by another electronic device, wherein the first message comprises first navigation information;
displaying first prompt information in response to receiving the first message, wherein the first prompt information is used to ask a user whether to accept the first navigation information; and
executing a navigation task related to the first navigation information in response to detecting an input performed by the user for determining to accept the first navigation information.

23. The electronic device according to claim 22, wherein when the instructions are executed by the one or more processors, the electronic device is enabled to perform the following steps:
displaying a second interface before receiving the first message, wherein the second interface is a display interface of second navigation information; and
switching from display of the second interface to display of a third interface in response to detecting the input, wherein the third interface is a display interface of the navigation task.

24. The electronic device according to claim 23, wherein the second interface is a display interface of a navigation route from a current location of the electronic device to a first address.

25. The electronic device according to any one of claims 22 to 24, wherein the first navigation information comprises information about a second address, and when the instructions are executed by the one or more processors, the electronic device is enabled to perform the following step:
displaying information about a route from the current location of the electronic device to the second address in response to detecting the input.

26. The electronic device according to any one of claims 22 to 25, wherein a first account is logged in to the electronic device, and when the instructions are executed by the one or more processors, the electronic device is enabled to perform the following step:
before displaying the first prompt information, detecting an operation of the user for enabling a first function, wherein in a case in which the first function is enabled, the electronic device can notify the user when receiving information shared by an electronic device to which another account other than the first account is logged in.

27. The electronic device according to any one of claims 22 to 26, wherein the electronic device stores first human physiological parameter information, and when the instructions are executed by the one or more processors, the electronic device is enabled to perform the following step:
before executing the navigation task, determining that human physiological parameter information of the user who performs the input matches the first human physiological parameter information.

28. The electronic device according to any one of claims 22 to 27, wherein when the instructions are executed by the one or more processors, the electronic device is enabled to perform the following steps:
receiving a second message sent by another electronic device, wherein the second message comprises third navigation information, and an account logged in to the another electronic device is associated with an account logged in to the electronic device; and
executing a navigation task related to the third navigation information in response to receiving the second message.

29. The electronic device according to any one of claims 22 to 28, wherein a second map application is installed on the electronic device, and when the instructions are executed by the one or more processors, the electronic device is enabled to perform the following step:
displaying the navigation task on the second map application in response to detecting the input.

30. The electronic device according to claim 29, wherein a first map application is installed on the another electronic device, a data format of the first navigation information is a first data format, the first data format belongs to a data format of the first map application, and when the instructions are executed by the one or more processors, the electronic device is enabled to perform the following steps:
converting the data format of the first navigation information into a second data format, wherein the second data format belongs to a data format of the second map application; and
displaying the navigation task based on the first navigation information obtained through data format conversion.

31. A computer storage medium, comprising computer instructions, wherein when the computer instructions are run on an electronic device, the electronic device is enabled to perform the method according to any one of claims 13 to 21.
